(19) Europäisches Patentamt
European Patent Office
Office européen des brevets

(11) Veröffentlichungsnummer: **0 532 564 B1**

# (12) EUROPÄISCHE PATENTSCHRIFT

(45) Veröffentlichungstag der Patentschrift: **09.08.95**

(51) Int. Cl.$^{6}$: **C07F 7/08**, A01N 55/00

(21) Anmeldenummer: **91910276.4**

(22) Anmeldetag: **29.05.91**

(86) Internationale Anmeldenummer:
**PCT/EP91/00989**

(87) Internationale Veröffentlichungsnummer:
**WO 91/18907 (12.12.91 91/28)**

Die Akte enthält technische Angaben, die nach dem Eingang der Anmeldung eingereicht wurden und die nicht in dieser Patentschrift enthalten sind.

## (54) PFLANZENSCHÜTZENDE SUBSTITUIERTE ISOXAZOLINE, ISOXAZOLE, ISOTHIAZOLINE UND ISOTHIAZOLE SOWIE VERFAHREN ZU IHRER HERSTELLUNG UND IHRE VERWENDUNG.

(30) Priorität: **01.06.90 DE 4017665**

(43) Veröffentlichungstag der Anmeldung:
**24.03.93 Patentblatt 93/12**

(45) Bekanntmachung des Hinweises auf die Patenterteilung:
**09.08.95 Patentblatt 95/32**

(84) Benannte Vertragsstaaten:
**DE FR GB IT**

(56) Entgegenhaltungen:
**EP-A- 0 249 015**
**US-A- 3 274 210**

(73) Patentinhaber: **Hoechst Schering AgrEvo GmbH**
**Gerichtstrasse 27**
**D-13342 Berlin (DE)**

(72) Erfinder: **LÖHER, Heinz-Josef**
**Ahornweg 14**
**D-6237 Liederbach (DE)**
Erfinder: **BAUER, Klaus**
**Doorner Strasse 53d**
**D-6450 Hanau (DE)**
Erfinder: **BIERINGER, Hermann**
**Eichenweg 26**
**D-6239 Eppstein (DE)**

EP 0 532 564 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Safener oder Antidote, die in Kombination mit Herbiziden die Phytotoxizität der Herbizide bei Kulturpflanzen herabsetzen können.

Gegenstand der Erfindung sind pflanzenschützende Verbindungen der allgemeinen Formel (I) oder deren Salze

$(R^1)(R^2)(R^3)$Si-A-Het-B-CO-Z (I)

worin

Het ein divalenter heterocyclischer Rest aus der Gruppe Isothiazoline, Isotniazole bzw. Isoxazole, Isoxazoline der Formeln (Ia) bis (Id),

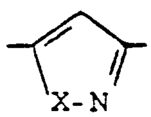
(Ia)

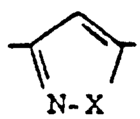
(Ib)

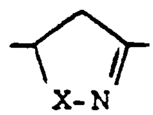
(Ic)

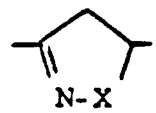
(Id)

in denen

X ein Sauerstoff- oder Schwefelatom bedeutet,

A und B unabhängig voneinander jeweils eine einfache Bindung oder $C_1$-$C_4$-Alkylen, das unsubstituiert oder ein- oder mehrfach durch $C_1$-$C_4$-Alkyl substituiert ist,

$R^1$, $R^2$, $R^3$ unabhängig voneinander $C_1$-$C_{18}$-Alkyl, $C_2$-$C_{18}$-Alkenyl, $C_2$-$C_{18}$-Alkinyl oder $C_3$-$C_8$-Cycloalkyl, wobei die 4 letztgenannten Reste unsubstituiert oder ein- oder mehrfach durch Reste aus der Gruppe $C_1$-$C_4$-Alkoxy, $C_1$-$C_4$-Alkylthio, Mono- oder Di-($C_1$-$C_4$-alkyl)-amino, ($C_1$-$C_4$-Alkoxy)-carbonyl, ($C_1$-$C_4$-Alkyl)-carbonyloxy, Cyano und Halogen substituiert sind, ferner Phenyl-($C_1$-$C_4$-alkyl) oder Phenyl, wobei die letztgenannten 2 Reste unsubstituiert oder ein- oder mehrfach durch Reste aus der Gruppe $C_1$-$C_4$-alkyl, $C_1$-$C_4$-Alkoxy, $C_1$-$C_4$-Alkylthio, Mono- und Di-($C_1$-$C_4$-alkyl)-amino, Cyano und Halogen substituiert sind,

Z Hydroxy, $C_1$-$C_6$-Alkoxy, $C_2$-$C_6$-Alkenyloxy, $C_2$-$C_6$-Alkinyloxy, $C_1$-$C_6$-Alkylthio, $C_3$-$C_6$-Cycloalkoxy, Phenoxy oder Benzyloxy, wobei die 7 letztgenannten Reste unsubstituiert oder ein- oder mehrfach durch Reste aus der Gruppe $C_1$-$C_4$-Alkoxy, Mono- oder Di-($C_1$-$C_4$-alkyl)-amino, $C_1$-$C_4$-Alkylthio, $C_1$-$C_4$-Halogenalkyl, $C_1$-$C_4$-Halogenalkoxy, Cyano und Halogen substituiert sind, oder

Z ferner Tri($C_1$-$C_4$-alkyl)-silylmethoxy,ferner einen Rest der Formel (Ie) oder (If),

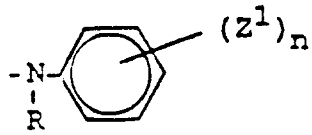
(Ie)

oder

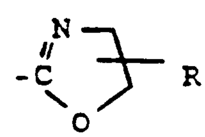
(If)

worin jeweils R Wasserstoff oder ($C_1$-$C_4$)Alkyl bedeutet, $Z^1$ Halogen ist und n 0, 1, 2, 3, 4 oder 5 ist, oder

Z ferner Amino, Mono- oder Di-($C_1$-$C_4$-alkyl)-amino, $C_5$-$C_6$-Cycloalkylamino, Hydrazino, Piperidino, Morpholino oder 2,6-Dimethylmorpholino, einen Rest der Formel (Ig),

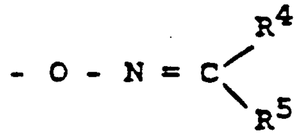

(Ig)

worin $R^4$ und $R^5$ unabhängig voneinander $C_1$-$C_4$-Alkyl bedeuten oder $R^4$ und $R^5$ gemeinsam mit dem sie verknüpfenden C-Atom einen 5-, 6- oder 7-gliedrigen Cycloalkylrest bilden, oder

Z einen Rest der Formel (Ih),

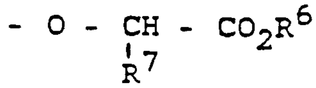

(Ih)

worin $R^6$ und $R^7$ unabhängig voneinander für Wasserstoff oder $C_1$-$C_6$-alkyl, $C_2$-$C_6$-Alkyl oder $C_2$-$C_6$-Alkinyl stehen,

bedeuten.

In der Formel (I) können Alkyl-, Alkoxy-, Haloalkyl-, Haloalkoxy-, Alkylamino- und Alkylthioreste im Alkylteil sowie die entsprechenden ungesättigten und/oder substituierten Reste im Kohlenwasserstoffteil jeweils geradkettig oder verzweigt sein. Alkylreste, auch in den zusammengesetzten Bedeutungen wie Alkoxy, Haloalkyl usw., bedeuten beispielsweise Methyl, Ethyl, n- und i-Propyl, n-, i-, t- und 2-Butyl, die isomeren Pentyl-, Hexyl-, Heptyl-, Octyl-, Nonyl-, Decyl-, Undecylund Dodecylreste sowie die längerkettigen Fettalkylreste mit bis zu 24 C-Atomen. Alkenyl- und Alkinylreste haben die Bedeutung der den Alkylresten entsprechenden möglichen ungesättigten Reste, vorzugsweise ($C_2$-$C_{12}$)-Alkenyl- und -Alkinylreste. Halogen bedeutet Fluor, Chlor, Brom oder Jod, Vorzugsweise Fluor, Chlor oder Brom, insbesondere Fluor oder Chlor.

Im Falle Z = OH können die Verbindungen der Formel (I) Salze bilden. Erfindungsgemäß einsetzen lassen sich die in der Landwirtschaft verwendbaren Salze. Als solche kommen beispielsweise Metallsalze wie Alkali- oder Erdalkalisalze, insbesondere Natrium- oder Kaliumsalze, Ammoniumsalze oder substituierte Ammoniumsalze, die 1- bis 4-fach durch Alkyl- und/oder Alkanolreste mit vorzugsweise bis zu 4 C-Atomen substituiert sind, in Frage.

Ferner erfaßt Formel (I) auch alle Stereoisomeren und deren Gemische, insbesondere auch reine Enantiomere und deren Gemische (z.B. Racemate). Stereoisomere können vor allem auftreten, wenn asymmetrische C-Atome oder geeignet substituierte Doppelbindungen in der Formel (I) vorhanden sind. Ein asymmetrisches C-Atom ist beispielsweise das an dem Sauerstoffatom im Isoxazolinring gebundene C-Atom.

Bevorzugt sind erfindungsgemäße Verbindungen der Formel (I) oder deren Salze, worin

Z Hydroxy, $C_1$-$C_4$-Alkoxy, $C_2$-$C_4$-Alkenyloxy, $C_2$-$C_4$-Alkinyloxy, $C_1$-$C_4$-Alkylthio, Phenoxy oder Benzyloxy, wobei die letztgenannten 6 Reste unsubstituiert oder ein- oder mehrfach durch Reste aus der Gruppe $C_1$-$C_4$-Alkyl, $C_1$-$C_4$-Alkoxy, $C_1$-$C_4$-Alkylthio, Mono- oder Di-($C_1$-$C_4$-alkyl)-amino, Cyano und Halogen substituiert sind, ferner Tri-($C_1$-$C_2$-alkyl)-silylmethoxy, einen Rest der genannten Formel (Ie) oder (If), worin R Wasserstoff oder $C_1$-$C_4$-Alkyl ist, $Z^1$ Halogen und n 0-5 sind, ferner Mono- und Di-($C_1$-$C_4$-alkyl)-amino, $C_5$-$C_6$-Cycloalkylamino, einen Rest der genannten Formel (Ih), worin $R^6$ für $C_1$-$C_4$-Alkyl, $C_2$-$C_4$-Alkenyl oder $C_2$-$C_6$-Alkinyl und $R^7$ für Wasserstoff oder Methyl stehen,

bedeutet.

Bevorzugt sind auch erfindungsgemäße Verbindungen der Formel (I) und deren Salze, worin

A eine direkte Bindung oder $C_1$-$C_2$-Alkylen, vorzugsweise eine direkte Bindung oder $CH_2$, und

B eine direkte Bindung oder $C_1$-$C_2$-Alkylen, vorzugsweise eine direkte Bindung oder $CH_2$,

bedeuten.

Bevorzugt sind ebenfalls erfindungsgemäße Verbindungen der Formel (I) oder deren Salze, worin $R^1$, $R^2$, $R^3$ unabhängig voneinander $C_1$-$C_6$-Alkyl, insbesondere Methyl, Ethyl, n- oder i-Propyl, n-, i-, t- oder 2-Butyl, Pentyl, n-, i- und 2-Hexyl, Phenyl oder Benzyl bedeuten.

Besonders bevorzugt sind erfindungsgemäße Verbindungen der Formel (I), in der A, B, Z, $Z^1$, n, R, $R^1$, $R^2$, $R^3$ und X jeweils für bevorzugt genannte Bedeutungen stehen.

Gegenstand der vorliegenden Erfindung ist auch ein Verfahren zur Herstellung der Verbindungen der Formel (I) und deren Salze, dadurch gekennzeichnet, daß man eine Verbindung der Formel (II) oder (III)

$(R^1)(R^2)(R^3)Si\text{-}A\text{-}CH=CH_2$ (II)

$(R^1)(R^2)(R^3)Si\text{-}A\text{-}C\equiv CH$ (III)

worin $R^1$, $R^2$, $R^3$ und A die bei Formel (I) angegebenen Bedeutungen haben, mit einem Nitriloxid der Formel (IV),

$$^{(-)}O - N = \overset{(+)}{C} - B - CO\text{-}Z \qquad \text{(IV)}$$

worin Z und B die bei Formel (I) angegebenen Bedeutungen haben, umsetzt oder daß man eine Verbindung der Formel (V) oder (VI),

$H_2C = CH - B - CO - Z$ (V)

$HC \equiv C - B - CO - Z$ (VI)

worin B und Z die bei Formel (I) angegebenen Bedeutungen haben, mit einer Verbindung der Formel (VII)

$(R^1)(R^2)(R^3)Si\text{-}A\text{-}C^{(+)}=N\text{-}O^{(-)}$ (VII)

worin $R^1$, $R^2$, $R^3$ und A die oben bei Formel (I) genannten Bedeutungen haben, umsetzt.

Als Lösungsmittel für die Umsetzungen eignen sich unpolare organische Lösungsmittel, z.B. Ether wie Diethylether oder THF. Die Umsetzungen können aber auch ohne Lösungsmittel durchgeführt werden.

Die Ausgangsverbindungen der Formeln (II) bis (VII) sind literaturbekannt (vgl. J. Org. Chem. 25, 1160 (1960); J. Med. Chem. 17 (1974), 549-552; J. Chem. Soc. Chem. Commun. 1984, 968-969; Can. J. Chem. 41, 2980 (1963), J. Am. Chem. Soc. 95, 6152 (1973), Fieser u. Fieser in Reagents for Organic Synthesis 10, 6 u. 11, 16; und jeweils dort genannte Zitate) oder lassen sich analog den bekannten Verbindungen herstellen.

Die Verbindungen der Formel (I) reduzieren oder unterbinden phytotoxische Nebenwirkungen, die beim Einsatz von Herbiziden in Nutzpflanzenkulturen auftreten können.

Die Verbindungen der Formel (I) und die herbiziden Wirkstoffe können zusammen oder in beliebiger Reihenfolge nacheinander ausgebracht werden. Die Verbindungen der Formel (I) sind dann in der Lage, schädliche Nebenwirkungen der Herbizide bei Kulturpflanzen zu vermindern oder völlig aufzuheben, ohne die Wirksamkeit dieser Herbizide gegen Schadpflanzen zu beeinträchtigen.

Hierdurch kann das Einsatzgebiet herkömmlicher Pflanzenschutzmittel ganz erheblich erweitert werden. Solche Verbindungen, die die Eigenschaft besitzen, Kulturpflanzen gegen phytotoxische Schäden durch Herbizide zu schützen, werden "Antidote" oder "Safener" genannt.

Herbizide, deren phytotoxische Nebenwirkungen mittels der Verbindungen der Formel (I) herabgesetzt werden können, sind z.B. Carbamate, Thiocarbamate, Halogenacetanilide, substituierte Phenoxy-, Naphthoxy-, Phenoxyphenoxy- , Benzyloxyphenoxy- und Heteroaryloxyphenoxy-carbonsäurederivate sowie Cyclohexandionderivate. Heteroaryloxy-phenoxycarbonsäure-derivate sind z.B. Chinolyloxy-, Chinoxalyloxy-, Pyridyloxy-, Benzoxazolyloxy-, Benzthiazolyloxy-phenoxy-carbonsäureester. Bevorzugt sind Phenoxphenoxy- und Heteroaryloxyphenoxycarbonsäureester. Als Ester kommen hierbei insbesondere niedere Alkyl-, Alkenyl- und Alkinylester in Frage.

Beispielsweise seien, folgende Herbizide genannt, ohne daß dadurch eine Beschränkung erfolgen soll:

A) Herbizide vom Typ der Phenoxyphenoxy-, Benzylphenoxy- und Heteroaryloxy-phenoxycarbonsäure-$(C_1\text{-}C_4)$alkyl-, -$(C_2\text{-}C_4)$alkenyl- und -$(C_3\text{-}C_4)$alkinylester, wie 2-(4-(2,4-Dichlorphenoxy)-phenoxy)-propionsäuremethylester, 2-(4-(4-Brom-2-chlorphenoxy)-phenoxy)-propionsäuremethylester, 2-(4-(4-Trifluormethylphenoxy)-phenoxy)-propionsäuremethylester, 2-(4-(2-Chlor-4-trifluormethylphenoxy)-phenoxy)-propionsäuremethylester, 2-(4-(2,4-Dichlorbenzyl)-phenoxy)-propionsäuremethylester, 4-(4-(4-Trifluorme-

thylphenoxy)-phenoxy)-pent-2-ensäureethylester, 2-(4-(3,5-Dichlorpyridyl-2-oxy)-phenoxy)-propionsäureethylester, 2-(4-(3,5-Dichlorpyridyl-2-oxy)-phenoxy)-propionsäurepropargylester, 2-(4-(6-Chlorbenzoxazol-2-yl-oxy)-phenoxy)-, propionsäureethylester, 2-(4-(3-Chlor-5-trifluormethyl-2-, pyridyloxy)-phenoxy)-propionsäuremethylester, 2-(4-(5-Trifluormethyl-2-pyridyloxy)-phenoxy)-propionsäurebutylester, 2-(4-(3-Fluor-5-chlorpyridyl-2-oxy)-phenoxy)-propionsäuremethylester, 2-(4-(3-Fluor-5-chlorpyridyl-2-oxy)-phenoxy)-propionsäurepropargylester, 2-(4-(6-Chlor-2-chinoxalyloxy)phenoxy)-propionsäuremethylester, 2-(4-(6-Fluor-2-chinoxalyloxy) phenoxy)-propionsäuremethylester, 2-(4-(6-Chlor-2-chinolyloxy)-phenoxy)-propionsäuremethylester, 2-(4-(5-Chlor-3-fluorpyridin-2-yloxy)-phenoxy)-thiopropionsäure-5-methoxycarbonylmethylester,

B) Chloracetanilid-Herbizide wie N-Methoxymethyl-2,6-diethyl-chloracetanilid, N-(3'-Methoxyprop-2'-yl)-methyl-6-ethyl-chloracetanilid, N-(3-Methyl-1,2,4-oxdiazol-5-yl-methyl)-chloressigsäure-2,6-dimethylanilid,

C) Thiocarbamate wie S-Ethyl-N,N-dipropylthiocarbamat oder S-Ethyl-N,N-diisobutylthiocarbamat,

D) Cyclohexandion-Derivate wie Methyl-3-(1-allyloxyimino)butyl-4-hydroxy-6,6-dimethyl-2-oxocyclohex-3-encarboxylat 2-(N-Ethoxybutyrimidoyl)-5-(2-ethylthiopropyl)-3-hydroxy-2-cyclohexen-1-on, 2-(N-Ethoxybutyrimidoyl)-5-(2-phenylthiopropyl)-3-hydroxy-2-cyclohexen-1-on, 2-(1-Allyloxyiminobutyl)-4-methoxycarbonyl-5,5-dimethyl-3-oxocyclohexenol, 2-(1-(3-Chlorallyloxy)-iminobutyl)-5-(2-ethylthio)propyl)-3-hydroxy-cyclohex-2-enon 2-(1-(Ethoxyimino)-butyl)-3-hydroxy-5-(thian-3-yl)-cyclohex-2-enon oder 2-(1-Ethoxyiminopropyl)-5-(2,4,6-trimethylphenyl)-3-hydroxy-2-cyclohexen-1-on.

Das Mengenverhältnis Safener:Herbizid kann innerhalb weiter Grenzen, vorzugsweise im Bereich zwischen 1:10 und 10:1, insbesondere zwischen 2:1 und 1:10, liegen. Die jeweils optimalen Mengen an Herbizid und Safener sind abhängig vom Typ des verwendeten Herbizids oder vom verwendeten Safener sowie von der Art des zu behandelnden Pflanzenbestandes und lassen sich von Fall zu Fall durch entsprechende Versuche ermitteln.

Haupteinsatzgebiete für die Anwendung der Safener sind vor allem Getreidekulturen (Weizen, Roggen, Gerste, Hafer), Reis, Mais, Sorghum, aber auch Baumwolle, Zuckerrübe, Zuckerrohr und Sojabohne.

Die Safener der Formel (I) können je nach ihren Eigenschaften zur Vorbehandlung des Saatgutes der Kulturpflanze (Beizung der Samen) verwendet werden oder vor der Saat in die Saatfurchen eingebracht werden oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Verbindungen der Formel (I) können je nach Indikation und vervendetem Herbizid innerhalb weiter Grenzen schwanken und variieren im allgemeinen zwischen 0,01 und 10 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden, das dadurch gekennzeichnet ist, daß eine wirksame Menge einer Verbindung der Formel (I) vor, nach oder gleichzeitig mit dem Herbizid auf die Pflanzen, Pflanzensamen oder die Anbaufläche appliziert wird.

Darüber hinaus weisen die erfindungsgemäßen Verbindungen wachstumsregulatorische Eigenschaften bei Kulturpflanzen auf. Sie greifen regulierend in den pflanzeneigenen Stoffwechsel ein und können damit zur Ernteerleichterung wie z.B. durch Auslösen von Desikkation, Abszission und Wuchsstauchung eingesetzt werden. Des weiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Die Verbindungen der Formel (I) oder deren Kombination mit einem oder mehreren der genannten Herbizide bzw. Herbizidgruppen können auf verschiedene Art formuliert werden, je nachdem welche biologischen und/oder chemischphysikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS) Dispersionen auf Öl- oder Wasserbasis (SC), Suspoemulsionen, Suspensionskonzentrate (SC), Stäubemittel (DP), ölmischbare Lösungen (OL), Beizmittel, Granulate (GR) in Form von Mikro-, Sprüh-, Aufzugs- und Adsorptions-Granulaten, Boden- bzw. Streugranulate (FG), wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van

Valkenburg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Intruduction to Clay Colloid Chemistry"; 2nd Ed., J. Wiley & Sons, N.Y., Marschen, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technolgie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Gegenstand der Erfindung sind deshalb auch die Mittel, welche die erfindungsgemäßen Verbindungen der Formel (I) enthalten. Vor allem sind diese einerseits pflanzenschützende Mittel, die einen oder mehrere Verbindungen der Formel (I) und dem jeweiligen Formulierungstyp entsprechende übliche inerte Hilfsmittel enthalten, und andererseits herbizide Mittel, die eine Kombination von Verbindungen der Formel (I) und ein oder mehrere Herbizide und dem jeweiligen Formulierungstyp entsprechende übliche Hilfsmittel enthalten.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole und Fettamine, Alkansulfonate oder Alkylarylsulfonate und Dispergiermittel, z.B. ligninsulfonsaures Natrium, 2,2'-dinaphthylmethan-6,6'-disulfonsaures Natrium, dibutylnaphthalin-sulfonsaures Natrium oder auch oleylmethyltaurinsaures Natrium enthalten. Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z.B. Blockcopolymere), Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde.

Boden- bzw. Streu-Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 0,1 bis 95 Gew.-%, Wirkstoff der Formel (I), oder Wirkstoffgemisch Antidot/Herbizid, 1 bis 99,9 Gew.-%, insbesondere 5 bis 99,8 Gew.-%, eines festen oder flüssigen Zusatzstoffes und 0 bis 25 Gew.-%, insbesondere 0.1 bis 25 Gew.-%, eines Tensides.

In Spritzpulvern beträgt die Wirkstoffkonzentration z.B. etwa 10 bis 90 Gew.-%, der Rest zu 100 Gew.-% besteht aus üblichen Formulierunysbestandteilen. Bei emulgierbaren Konzentraten kann die Wirkstoffkonzentration etwa 1 bis 80 Gew.-% betragen. Staubförmige Formulierungen enthalten meistens 1 bis 20 Gew.-% an Wirkstoff, versprühbare Lösungen etwa 0,2 bis 20 Gew.-% Wirkstoff. Bei wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I). Sie kann innerhalb weiter

Grenzen schwanken, z.B. zwischen 0,005 und 10,0 kg/ha oder mehr Aktivsubstanz, vorzugsweise liegt sie jedoch zwischen 0,01 und 5 kg/ha.

Folgende Beispiele dienen zur Erläuterung der Erfindung:

**A. Formulierungsbeispiele**

a) Ein Stäubmittel wird erhalten, indem man 10 Gew.-Teile einer Verbindung der Formel (I) oder gegebenenfalls ein Wirkstoffgemisch mit einem Herbizid und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile einer Verbindung der Formel (I) oder ein Wirkstoffgemisch aus Safener der Formel (I) mit einem Herbizid, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile einer Verbindung der Formel (I) gegebenenfalls in Mischung mit einem Herbizid mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen einer Verbindung der Formel (I) oder einem Wirkstoffgemisch aus Safener (I) und Herbizid, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man
75 Gewichtsteile einer Verbindung der Formel I, gegebenenfalls in Mischung mit einem Herbizid,
10 Gewichtsteile ligninsulfonsaures Calcium,
5 Gewichtsteile Natriumlaurylsulfat,
3 Gewichtsteile Polyvinylalkohol und
7 Gewichtsteile Kaolin
mischt, auf einer stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gewichtsteile einer Verbindung der Formel (I) oder einer Mischung der Verbindung mit einem Herbizid,
5 Gewichtsteile 2,2'-Dinaphthylmethan-6,6'-disulfonsaures Natrium,
2 Gewichtsteile oleoylmethyltaurinsaures Natrium,
1 Gewichtsteil Polyvinylalkohol,
17 Gewichtsteile Calciumcarbonat und
50 Gewichtsteile Wasser
auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

**B) Chemische Beispiele**

5-Trimethylsilyl-2-isoxazolin-3-carbonsäuremethylester (Tabelle 1, Beispiel Nr. 2)

3 g Vinyltrimethylsilan und 4,13 g Chloroximinomethylacetat werden in 150 ml Ether vorgelegt und 4,1 g Triethylamin in 150 ml Ether dann langsam zugetropft. Anschließend wird Wasser zugegeben und mehrmals mit Ether extrahiert. Die Etherphase wird mit Magnesiumsulfat getrocknet, am Rotavapor eingeengt und über eine Kieselgelsäule (Lösungsmittel n-Heptan:Essigester 9:1) getrennt
Ausbeute: 5,1 g der gewünschten Reinsubstanz.
Brechungsindex $n_D^{20}$ = 1,467.

5-Trimethylsilylmethyl-2-isoxazolin-3-carbonsäureethylester (Tabelle 1, Beispiel 3)

3,43 g Allyltrimethylsilan und 4,55 g Chloroximinoethylacetat werden in 150 ml Ether vorgelegt. Man läßt dann 3,03 g Triethylamin in 150 ml Ether langsam zutropfen. Anschließend wird Wasser zugegeben und mehrmals mit Ether extrahiert. Die Etherphase wird über $MgSO_4$ getrocknet und anschließend der Ether am Rotavapor abgezogen. Die Trennung über eine Kieselgelsäule (Lösungsmittel:n-Heptan:Essigester

= 8:2) ergibt 4,2 g der gewünschten Reinsubstanz mit einem Brechungsindex $n_D^{20}$ = 1,462

Die in den Tabellen 1-6 aufgeführten Beispiele werden in analoger Weise erhalten.

Die analogen Carbonsäuren können auch aus den entsprechenden Estern bzw. die Ester wahlweise aus den entsprechenden Carbonsäuren nach im Prinzip bekannten Methoden hergestellt werden.

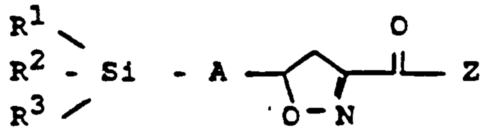

(1)

| Bsp. | $R^1$ | $R^2$ | $R^3$ | A | Z | Fp/$n_D^{20}$ |
|---|---|---|---|---|---|---|
| 1 | $CH_3$ | $CH_3$ | $CH_3$ | $-CH_2-$ | OH | 103°C |
| 2 | " | " | " | " | $-OCH_3$ | 1,467 |
| 3 | " | " | " | " | $-OC_2H_5$ | 1,462 |
| 4 | " | " | " | " | $-OC_3H_7$ | |
| 5 | " | " | " | " | $-O-CH(CH_3)_2$ | |
| 6 | " | " | " | " | $-OC_4H_9$ | 1,462 |
| 7 | " | " | " | " | $-OCH_2CO_2C_2H_5$ | |
| 8 | " | " | " | " | $-OC_6H_5$ | |
| 9 | " | " | " | " | $-O-CH_2C_6H_5$ | |
| 10 | " | " | " | " | $-OCH_2CH=CH_2$ | 1,4712 |
| 11 | " | " | " | " | $-OCH_2C{\equiv}CH$ | 1,482 |
| 12 | " | " | " | " | $-O^-Na^+$ | |
| 13 | " | " | " | " | $-OCH_2Si(CH_3)_3$ | |
| 14 | " | " | " | " | $-N(CH_3)_2$ | |
| 15 | " | " | " | " | $-O-CH(CH_3)CO_2C_2H_5$ | |
| 16 | " | " | " | " | $-NH_2$ | |
| 17 | " | " | " | " | $-O^-NH_4^+$ | |
| 18 | " | " | " | " | $-OCH_3CO_2CH_3$ | |
| 19 | " | " | " | " | $-OCH(CH_3)CO_2CH_3$ | |
| 20 | " | " | " | " | $-O^-K^+$ | |
| 21 | " | " | " | " | $-OCH_2CH(CH_3)_2$ | |

**Fortsetzung Tabelle 1**

| Bsp. | $R^1$ | $R^2$ | $R^3$ | A | Z | $n_D^{20}$ |
|---|---|---|---|---|---|---|
| 22 | $CH_3$ | $CH_3$ | $C_6H_5$ | $-CH_2-$ | OH | 1,530 |
| 23 | " | " | " | " | $-OCH_3$ | 1,5252 |
| 24 | " | " | " | " | $-OC_2H_5$ | 1,514 |
| 25 | " | " | " | " | $-OC_3H_7$ | |
| 26 | " | " | " | " | $-O-CH(CH_3)_2$ | |
| 27 | " | " | " | " | $-OC_4H_9$ | |
| 28 | " | " | " | " | $-OCH_2CO_2C_2H_5$ | |
| 29 | " | " | " | " | $-OC_6H_5$ | |
| 30 | " | " | " | " | $-O-CH_2C_6H_5$ | |
| 31 | " | " | " | " | $-OCH_2CH=CH_2$ | |
| 32 | " | " | " | " | $-OCH_2C\equiv CH$ | |
| 33 | " | " | " | " | $-O^-Na^+$ | |
| 34 | " | " | " | " | $-OCH_2Si(CH_3)_3$ | |
| 35 | " | " | " | " | $-N(CH_3)_2$ | |
| 36 | " | " | " | " | $-O-CH(CH_3)CO_2C_2H_5$ | |
| 37 | " | " | " | " | $-NH_2$ | |
| 38 | " | " | " | " | $-O^-NH_4^+$ | |
| 39 | " | " | " | " | $-OCH_3CO_2CH_3$ | |
| 40 | " | " | " | " | $-OCH(CH_3)CO_2CH_3$ | |
| 41 | " | " | " | " | $-O^-K^+$ | |
| 42 | " | " | " | " | $-OCH_2CH(CH_3)_2$ | |

**Fortsetzung Tabelle 1**

| Bsp. | $R^1$ | $R^2$ | $R^3$ | A | Z |
|---|---|---|---|---|---|
| 43 | $CH_3$ | $CH_3$ | $C_2H_5$ | $-CH_2-$ | OH |
| 44 | " | " | " | " | $-OCH_3$ |
| 45 | " | " | " | " | $-OC_2H_5$ |
| 46 | " | " | " | " | $-OC_3H_7$ |
| 47 | " | " | " | " | $-O-CH(CH_3)_2$ |
| 48 | " | " | " | " | $-OC_4H_9$ |
| 49 | " | " | " | " | $-OCH_2CO_2C_2H_5$ |
| 50 | " | " | " | " | $-OC_6H_5$ |
| 51 | " | " | " | " | $-O-CH_2C_6H_5$ |
| 52 | " | " | " | " | $-OCH_2CH=CH_2$ |
| 53 | " | " | " | " | $-OCH_2C\equiv CH$ |
| 54 | " | " | " | " | $-O^-Na^+$ |
| 55 | " | " | " | " | $-OCH_2Si(CH_3)_3$ |
| 56 | " | " | " | " | $-N(CH_3)_2$ |
| 57 | " | " | " | " | $-O-CH(CH_3)CO_2C_2H_5$ |
| 58 | " | " | " | " | $-NH_2$ |
| 59 | " | " | " | " | $-O^-NH_4^+$ |
| 60 | " | " | " | " | $-OCH_3CO_2CH_3$ |
| 61 | " | " | " | " | $-OCH(CH_3)CO_2CH_3$ |
| 62 | " | " | " | " | $-O^-K^+$ |
| 63 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 64 | $CH_3$ | $CH_3$ | $C_2H_5$ | $-CH_2-$ | OH |
| 65 | " | " | " | " | $-OCH_3$ |
| 66 | " | " | " | " | $-OC_2H_5$ |
| 67 | " | " | " | " | $-OC_3H_7$ |
| 68 | " | " | " | " | $-O-CH(CH_3)_2$ |
| 69 | " | " | " | " | $-OC_4H_9$ |
| 70 | " | " | " | " | $-OCH_2CO_2C_2H_5$ |
| 71 | " | " | " | " | $-OC_6H_5$ |
| 72 | " | " | " | " | $-O-CH_2C_6H_5$ |
| 73 | " | " | " | " | $-OCH_2CH=CH_2$ |
| 74 | " | " | " | " | $-OCH_2C{\equiv}CH$ |
| 75 | " | " | " | " | $-O^-Na^+$ |
| 76 | " | " | " | " | $-OCH_2Si(CH_3)_3$ |
| 77 | " | " | " | " | $-N(CH_3)_2$ |
| 78 | " | " | " | " | $-O-CH(CH_3)CO_2C_2H_5$ |
| 79 | " | " | " | " | $-NH_2$ |
| 80 | " | " | " | " | $-O^-NH_4^+$ |
| 81 | " | " | " | " | $-OCH_3CO_2CH_3$ |
| 82 | " | " | " | " | $-OCH(CH_3)CO_2CH_3$ |
| 83 | " | " | " | " | $-O^-K^+$ |
| 84 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 85 | $-CH(CH_3)_2$ | $-CH(CH_3)_2$ | $-CH(CH_3)_2$ | $-CH_2-$ | OH |
| 86 | " | " | " | " | $-OCH_3$ |
| 87 | " | " | " | " | $-OC_2H_5$ |
| 88 | " | " | " | " | $-OC_3H_7$ |
| 89 | " | " | " | " | $-O-CH(CH_3)_2$ |
| 90 | " | " | " | " | $-OC_4H_9$ |
| 91 | " | " | " | " | $-OCH_2CO_2C_2H_5$ |
| 92 | " | " | " | " | $-OC_6H_5$ |
| 93 | " | " | " | " | $-O-CH_2C_6H_5$ |
| 94 | " | " | " | " | $-O-CH_2CH=CH_2$ |
| 95 | " | " | " | " | $-OCH_2C{\equiv}CH$ |
| 96 | " | " | " | " | $-O^-Na^+$ |
| 97 | " | " | " | " | $-OCH_2Si(CH_3)_3$ |
| 98 | " | " | " | " | $-N(CH_3)_2$ |
| 99 | " | " | " | " | $-O-CH(CH_3)CO_2C_2H_5$ |
| 100 | " | " | " | " | $-NH_2$ |
| 101 | " | " | " | " | $-O^-NH_4^+$ |
| 102 | " | " | " | " | $-OCH_2Cl_2CH_3$ |
| 103 | " | " | " | " | $-OCH(CH_3)CO_2CH_3$ |
| 104 | " | " | " | " | $-O^-K^+$ |
| 105 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 106 | $C_6H_5$ | $C_6H_5$ | $C_6H_5$ | $CH_2$ | OH |
| 107 | " | " | " | " | $-OCH_3$ |
| 108 | " | " | " | " | $-OC_2H_5$ |
| 109 | " | " | " | " | $-OC_3H_7$ |
| 110 | " | " | " | " | $-O-CH(CH_3)_2$ |
| 111 | " | " | " | " | $-OC_4H_9$ |
| 112 | " | " | " | " | $-OCH_2CO_2C_2H_5$ |
| 113 | " | " | " | " | $-OC_6H_5$ |
| 114 | " | " | " | " | $-O-CH_2C_6H_5$ |
| 115 | " | " | " | " | $-OCH_2CH=CH_2$ |
| 116 | " | " | " | " | $-OCH_2C\equiv CH$ |
| 117 | " | " | " | " | $-O^-Na^+$ |
| 118 | " | " | " | " | $-OCH_2Si(CH_3)_3$ |
| 119 | " | " | " | " | $-N(CH_3)_2$ |
| 120 | " | " | " | " | $-O-CH(CH_3)CO_2C_2H_5$ |
| 121 | " | " | " | " | $-NH_2$ |
| 122 | " | " | " | " | $-O^-NH_4^+$ |
| 123 | " | " | " | " | $-OCH_3CO_2CH_3$ |
| 124 | " | " | " | " | $-OCH(CH_3)CO_2CH_3$ |
| 125 | " | " | " | " | $-O^-K^+$ |
| 126 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 127 | $CH_3$ | $CH_3$ | $(t)C_4H_9$ | $CH_2$ | OH |
| 128 | " | " | " | " | $-OCH_3$ |
| 129 | " | " | " | " | $-OC_2H_5$ |
| 130 | " | " | " | " | $-OC_3H_7$ |
| 131 | " | " | " | " | $-O-CH(CH_3)_2$ |
| 132 | " | " | " | " | $-OC_4H_9$ |
| 133 | " | " | " | " | $-OCH_2CO_2C_2H_5$ |
| 134 | " | " | " | " | $-OC_6H_5$ |
| 135 | " | " | " | " | $-O-CH_2C_6H_5$ |
| 136 | " | " | " | " | $-OCH_2CH{=}CH_2$ |
| 137 | " | " | " | " | $-OCH_2C{\equiv}CH$ |
| 138 | " | " | " | " | $-O^-Na^+$ |
| 139 | " | " | " | " | $-OCH_2Si(CH_3)_3$ |
| 140 | " | " | " | " | $-N(CH_3)_2$ |
| 141 | " | " | " | " | $-O-CH(CH_3)CO_2C_2H_5$ |
| 142 | " | " | " | " | $-NH_2$ |
| 143 | " | " | " | " | $-O^-NH_4^+$ |
| 144 | " | " | " | " | $-OCH_3CO_2CH_3$ |
| 145 | " | " | " | " | $-OCH(CH_3)CO_2CH_3$ |
| 146 | " | " | " | " | $-O^-K^+$ |
| 147 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 148 | $(n)C_6H_{13}$ | $(n)C_6H_{13}$ | $(n)C_6H_{13}$ | $CH_2$ | OH |
| 149 | " | " | " | " | $-OCH_3$ |
| 150 | " | " | " | " | $-OC_2H_5$ |
| 151 | " | " | " | " | $-OC_3H_7$ |
| 152 | " | " | " | " | $-O-CH(CH_3)_2$ |
| 153 | " | " | " | " | $-OC_4H_9$ |
| 154 | " | " | " | " | $-OCH_2CO_2C_2H_5$ |
| 155 | " | " | " | " | $-OC_6H_5$ |
| 156 | " | " | " | " | $-O-CH_2C_6H_5$ |
| 157 | " | " | " | " | $-O-CH_2CH{=}CH_2$ |
| 158 | " | " | " | " | $-OCH_2C{\equiv}CH$ |
| 159 | " | " | " | " | $-O^-Na^+$ |
| 160 | " | " | " | " | $-OCH_2Si(CH_3)_3$ |
| 161 | " | " | " | " | $-N(CH_3)_2$ |
| 162 | " | " | " | " | $-O-CH(CH_3)CO_2C_2H_5$ |
| 163 | " | " | " | " | $-NH_2$ |
| 164 | " | " | " | " | $-O^-NH_4{}^+$ |
| 165 | " | " | " | " | $-OCH_2Cl_2CH_3$ |
| 166 | " | " | " | " | $-OCH(CH_3)CO_2CH_3$ |
| 167 | " | " | " | " | $-O^-K^+$ |
| 168 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 169 | (iso)$C_4H_9$ | (iso)$C_4H_9$ | (iso)$C_4H_9$ | $-CH_2-$ | OH |
| 170 | " | " | " | " | $-OCH_3$ |
| 171 | " | " | " | " | $-OC_2H_5$ |
| 172 | " | " | " | " | $-OC_3H_7$ |
| 173 | " | " | " | " | $-O-CH(CH_3)_2$ |
| 174 | " | " | " | " | $-OC_4H_9$ |
| 175 | " | " | " | " | $-OCH_2CO_2C_2H_5$ |
| 176 | " | " | " | " | $-OC_6H_5$ |
| 177 | " | " | " | " | $-O-CH_2C_6H_5$ |
| 178 | " | " | " | " | $-O-CH_2CH=CH_2$ |
| 179 | " | " | " | " | $-OCH_2C\equiv CH$ |
| 180 | " | " | " | " | $-O^-Na^+$ |
| 181 | " | " | " | " | $-OCH_2Si(CH_3)_3$ |
| 182 | " | " | " | " | $-N(CH_3)_2$ |
| 183 | " | " | " | " | $-O-CH(CH_3)CO_2C_2H_5$ |
| 184 | " | " | " | " | $-NH_2$ |
| 185 | " | " | " | " | $-O^-NH_4{}^+$ |
| 186 | " | " | " | " | $-OCH_2Cl_2CH_3$ |
| 187 | " | " | " | " | $-OCH(CH_3)CO_2CH_3$ |
| 188 | " | " | " | " | $-O^-K^+$ |
| 189 | " | " | " | " | $-OCH_2CH(CH_3)_2$ |

**Fortsetzung Tabelle 1**

| Bsp. | $R^1$ | $R^2$ | $R^3$ | A | Z |
|---|---|---|---|---|---|
| 190 | (n)$C_3H_7$ | (n)$C_3H_7$ | (n)$C_3H_7$ | $CH_2$ | OH |
| 191 | " | " | " | " | $-OCH_3$ |
| 192 | " | " | " | " | $-OC_2H_5$ |
| 193 | " | " | " | " | $-OC_3H_7$ |
| 194 | " | " | " | " | $-O-CH(CH_3)_2$ |
| 195 | " | " | " | " | $-OC_4H_9$ |
| 196 | " | " | " | " | $-OCH_2CO_2C_2H_5$ |
| 197 | " | " | " | " | $-OC_6H_5$ |
| 198 | " | " | " | " | $-O-CH_2C_6H_5$ |
| 199 | " | " | " | " | $-O-CH_2CH=CH_2$ |
| 200 | " | " | " | " | $-OCH_2C\equiv CH$ |
| 201 | " | " | " | " | $-O^-Na^+$ |
| 202 | " | " | " | " | $-OCH_2Si(CH_3)_3$ |
| 203 | " | " | " | " | $-N(CH_3)_2$ |
| 204 | " | " | " | " | $-O-CH(CH_3)CO_2C_2H_5$ |
| 205 | " | " | " | " | $-NH_2$ |
| 206 | " | " | " | " | $-O^-NH_4^+$ |
| 207 | " | " | " | " | $-OCH_2Cl_2CH_3$ |
| 208 | " | " | " | " | $-OCH(CH_3)CO_2CH_3$ |
| 209 | " | " | " | " | $-O^-K^+$ |
| 210 | " | " | " | " | $-OCH_2CH(CH_3)_2$ |

**Fortsetzung Tabelle 1**

| Bsp. | $R^1$ | $R^2$ | $R^3$ | A | Z | $n_D^{20}$ |
|---|---|---|---|---|---|---|
| 211 | $CH_3$ | $CH_3$ | (iso)$C_3H_7$ | $CH_2$ | $OCH_3$ | 1,4709 |
| 212 | " | " | " | " | $OC_2H_5$ | 1,4693 |
| 213 | " | " | $-C(CH_3)_2CH(CH_3)_2$ | " | $OCH_3$ | |
| 214 | " | " | " | " | $OC_2H_5$ | |
| 215 | $-CH_2C_6H_5$ | $CH_2C_6H_5$ | $CH_2C_6H_5$ | " | $OCH_3$ | |
| 216 | " | " | " | " | $OC_2H_5$ | |
| 217 | (n)$C_4H_9$ | (n)$C_4H_9$ | (n)$C_4H_9$ | " | $OCH_3$ | |
| 218 | " | " | " | " | $OC_2H_5$ | |
| 219 | " | " | " | " | OH | |
| 220 | $CH_3$ | $CH_3$ | (n)$C_8H_{17}$ | " | OH | |
| 221 | " | " | " | " | $OCH_3$ | |
| 222 | " | " | " | " | $OC_2H_5$ | |
| 223 | " | " | $-CH_2C_6H_5$ | " | OH | |
| 224 | " | " | " | " | $OCH_3$ | |
| 225 | " | " | " | " | $OC_2H_5$ | |
| 226 | " | " | (n)$C_{18}H_{37}$ | " | OH | |
| 227 | " | " | " | " | $OCH_3$ | Wachs |
| 228 | " | " | " | " | $OC_2H_5$ | Wachs |
| 229 | " | " | (n)$C_{10}H_{21}$ | " | OH | |
| 230 | " | " | " | " | $OCH_3$ | |
| 231 | " | " | " | " | $OC_2H_5$ | |

**Fortsetzung Tabelle 1**

| Bsp. | $R^1$ | $R^2$ | $R^3$ | A | Z |
|---|---|---|---|---|---|
| 232 | $CH_3$ | $CH_3$ | $-CH_2CH_2C(CH_3)_2CH_3$ | $CH_2$ | OH |
| 233 | " | " | " | " | $OCH_3$ |
| 234 | " | " | " | " | $OC_2H_5$. |
| 235 | " | " | $(iso)C_3H_7$ | " | OH |
| 236 | " | " | $C(CH_3)_2CH(CH_3)_2$ | " | OH |
| 237 | $CH_2C_6H_5$ | $CH_2C_6H_5$ | $CH_2C_6H_5$ | " | OH |
| 238 | $CH_3$ | $C_2H_5$ | $C_2H_5$ | " | OH |
| 239 | " | " | " | " | $OCH_3$ |
| 240 | " | " | " | " | $OC_2H_5$ |
| 241 | $CH_3$ | $CH_3$ | $(n)C_3H_7$ | " | OH |
| 242 | " | " | " | " | $OCH_3$ |
| 243 | " | " | " | " | $OC_2H_5$ |
| 244 | $CH_3$ | $(n)C_3H_7$ | $(n)C_3H_7$ | " | OH |
| 245 | " | " | " | " | $OCH_3$ |
| 246 | " | " | " | " | $OC_2H_5$ |
| 247 | $CH_3$ | $isoC_3H_7$ | $isoC_3H_7$ | " | OH |
| 248 | " | " | " | " | $OCH_3$ |
| 249 | " | " | " | " | $OC_2H_5$ |
| 250 | $CH_3$ | $CH_3$ | $n-C_4H_9$ | " | OH |
| 251 | " | " | " | " | $OCH_3$ |
| 252 | " | " | " | " | $OC_2H_5$ |
| 253 | " | $nC_4H_9$ | $n-C_4H_9$ | " | OH |
| 254 | " | " | " | " | $OCH_3$ |
| 255 | " | " | " | " | $OC_2H_5$ |
| 256 | $CH_3$ | $C_6H_5$ | $C_6H_5$ | " | OH |
| 257 | " | " | " | " | $OCH_3$ |
| 258 | " | " | " | " | $OC_2H_5$ |

Tabelle 2

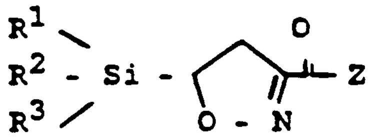

(2)

| Bsp. | $R^1$ | $R^2$ | $R^3$ | Z | $n_D^{20}$ |
|---|---|---|---|---|---|
| 259 | $CH_3$ | $CH_3$ | $CH_3$ | OH | |
| 260 | " | " | " | $-OCH_3$ | 1,466 |
| 261 | " | " | " | $-OC_2H_5$ | 1,463 |
| 262 | " | " | " | $-OC_3H_7$ | |
| 263 | " | " | " | $-O-CH(CH_3)_2$ | |
| 264 | " | " | " | $-OC_4H_9$ | |
| 265 | " | " | " | $-OCH_2CO_2C_2H_5$ | |
| 266 | " | " | " | $-OC_6H_5$ | |
| 267 | " | " | " | $-O-CH_2C_6H_5$ | |
| 268 | " | " | " | $-OCH_2CH=CH_2$ | |
| 269 | " | " | " | $-OCH_2C\equiv CH$ | |
| 270 | " | " | " | $-O^-Na^+$ | |
| 271 | " | " | " | $-OCH_2Si(CH_3)_3$ | |
| 272 | " | " | " | $-N(CH_3)_2$ | |
| 273 | " | " | " | $-O-CH(CH_3)CO_2C_2H_5$ | |
| 274 | " | " | " | $-NH_2$ | |
| 275 | " | " | " | $-O^-NH_4^+$ | |
| 276 | " | " | " | $-OCH_3CO_2CH_3$ | |
| 277 | " | " | " | $-OCH(CH_3)CO_2CH_3$ | |
| 278 | " | " | " | $-O^-K^+$ | |
| 279 | " | " | " | $-OCH_2CH(CH_3)_2$ | |

**Fortsetzung Tabelle 2**

| Bsp. | $R^1$ | $R^2$ | $R^3$ | Z |
|---|---|---|---|---|
| 280 | $CH_3$ | $CH_3$ | $C_6H_5$ | OH |
| 281 | " | " | " | $-OCH_3$ |
| 282 | " | " | " | $-OC_2H_5$ |
| 283 | " | " | " | $-OC_3H_7$ |
| 284 | " | " | " | $-O-CH(CH_3)_2$ |
| 285 | " | " | " | $-OC_4H_9$ |
| 286 | " | " | " | $-OCH_2CO_2C_2H_5$ |
| 287 | " | " | " | $-OC_6H_5$ |
| 288 | " | " | " | $-O-CH_2C_6H_5$ |
| 289 | " | " | " | $-OCH_2CH=CH_2$ |
| 290 | " | " | " | $-OCH_2C\equiv CH$ |
| 291 | " | " | " | $-O^-Na^+$ |
| 292 | " | " | " | $-OCH_2Si(CH_3)_3$ |
| 293 | " | " | " | $-N(CH_3)_2$ |
| 294 | " | " | " | $-O-CH(CH_3)CO_2C_2H_5$ |
| 295 | " | " | " | $-NH_2$ |
| 296 | " | " | " | $-O^-NH_4^+$ |
| 297 | " | " | " | $-OCH_3CO_2CH_3$ |
| 298 | " | " | " | $-OCH(CH_3)CO_2CH_3$ |
| 299 | " | " | " | $-O^-K^+$ |
| 300 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 301 | $CH_3$ | $CH_3$ | $C_6H_5$ | OH |
| 302 | " | " | " | $-OCH_3$ |
| 303 | " | " | " | $-OC_2H_5$ |
| 304 | " | " | " | $-OC_3H_7$ |
| 305 | " | " | " | $-O-CH(CH_3)_2$ |
| 306 | " | " | " | $-OC_4H_9$ |
| 307 | " | " | " | $-OCH_2CO_2C_2H_5$ |
| 308 | " | " | " | $-OC_6H_5$ |
| 309 | " | " | " | $-O-CH_2C_6H_5$ |
| 310 | " | " | " | $-OCH_2CH=CH_2$ |
| 311 | " | " | " | $-OCH_2C\equiv CH$ |
| 312 | " | " | " | $-O^-Na^+$ |
| 313 | " | " | " | $-OCH_2Si(CH_3)_3$ |
| 314 | " | " | " | $-N(CH_3)_2$ |
| 315 | " | " | " | $-O-CH(CH_3)CO_2C_2H_5$ |
| 316 | " | " | " | $-NH_2$ |
| 317 | " | " | " | $-O^-NH_4^+$ |
| 318 | " | " | " | $-OCH_3CO_2CH_3$ |
| 319 | " | " | " | $-OCH(CH_3)CO_2CH_3$ |
| 320 | " | " | " | $-O^-K^+$ |
| 321 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 322 | $C_2H_5$ | $C_2H_5$ | $C_6H_5$ | OH |
| 323 | " | " | " | $-OCH_3$ |
| 324 | " | " | " | $-OC_2H_5$ |
| 325 | " | " | " | $-OC_3H_7$ |
| 326 | " | " | " | $-O-CH(CH_3)_2$ |
| 327 | " | " | " | $-OC_4H_9$ |
| 328 | " | " | " | $-OCH_2CO_2C_2H_5$ |
| 329 | " | " | " | $-OC_6H_5$ |
| 330 | " | " | " | $-O-CH_2C_6H_5$ |
| 331 | " | " | " | $-OCH_2CH=CH_2$ |
| 332 | " | " | " | $-OCH_2C\equiv CH$ |
| 333 | " | " | " | $-O^-Na^+$ |
| 334 | " | " | " | $-OCH_2Si(CH_3)_3$ |
| 335 | " | " | " | $-N(CH_3)_2$ |
| 336 | " | " | " | $-O-CH(CH_3)CO_2C_2H_5$ |
| 337 | " | " | " | $-NH_2$ |
| 338 | " | " | " | $-O^-NH_4^+$ |
| 339 | " | " | " | $-OCH_3CO_2CH_3$ |
| 340 | " | " | " | $-OCH(CH_3)CO_2CH_3$ |
| 341 | " | " | " | $-O^-K^+$ |
| 342 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 343 | $-CH(CH_3)_2$ | $-CH(CH_3)_2$ | $-CH(CH_3)_2$ | OH |
| 344 | " | " | " | $-OCH_3$ |
| 345 | " | " | " | $-OC_2H_5$ |
| 346 | " | " | " | $-OC_3H_7$ |
| 347 | " | " | " | $-O-CH(CH_3)_2$ |
| 348 | " | " | " | $-OC_4H_9$ |
| 349 | " | " | " | $-OCH_2CO_2C_2H_5$ |
| 350 | " | " | " | $-OC_6H_5$ |
| 351 | " | " | " | $-O-CH_2C_6H_5$ |
| 352 | " | " | " | $-O-CH_2CH=CH_2$ |
| 353 | " | " | " | $-OCH_2C\equiv CH$ |
| 354 | " | " | " | $-O^-Na^+$ |
| 355 | " | " | " | $-OCH_2Si(CH_3)_3$ |
| 356 | " | " | " | $-N(CH_3)_2$ |
| 357 | " | " | " | $-O-CH(CH_3)CO_2C_2H_5$ |
| 358 | " | " | " | $-NH_2$ |
| 359 | " | " | " | $-O^-NH_4{}^+$ |
| 360 | " | " | " | $-OCH_2Cl_2CH_3$ |
| 361 | " | " | " | $-OCH(CH_3)CO_2CH_3$ |
| 362 | " | " | " | $-O^-K^+$ |
| 363 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 364 | $C_6H_5$ | $C_6H_5$ | $C_6H_5$ | OH |
| 365 | " | " | " | $-OCH_3$ |
| 366 | " | " | " | $-OC_2H_5$ |
| 367 | " | " | " | $-OC_3H_7$ |
| 368 | " | " | " | $-O-CH(CH_3)_2$ |
| 369 | " | " | " | $-OC_4H_9$ |
| 370 | " | " | " | $-OCH_2CO_2C_2H_5$ |
| 371 | " | " | " | $-OC_6H_5$ |
| 372 | " | " | " | $-O-CH_2C_6H_5$ |
| 373 | " | " | " | $-OCH_2CH=CH_2$ |
| 374 | " | " | " | $-OCH_2C\equiv CH$ |
| 375 | " | " | " | $-O^-Na^+$ |
| 376 | " | " | " | $-OCH_2Si(CH_3)_3$ |
| 377 | " | " | " | $-N(CH_3)_2$ |
| 378 | " | " | " | $-O-CH(CH_3)CO_2C_2H_5$ |
| 379 | " | " | " | $-NH_2$ |
| 380 | " | " | " | $-O^-NH_4{}^+$ |
| 381 | " | " | " | $-OCH_3CO_2CH_3$ |
| 382 | " | " | " | $-OCH(CH_3)CO_2CH_3$ |
| 383 | " | " | " | $-O^-K^+$ |
| 384 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 385 | $CH_3$ | $CH_3$ | $(t)-C_4H_9$ | OH |
| 386 | " | " | " | $-OCH_3$ |
| 387 | " | " | " | $-OC_2H_5$ |
| 388 | " | " | " | $-OC_3H_7$ |
| 389 | " | " | " | $-O-CH(CH_3)_2$ |
| 390 | " | " | " | $-OC_4H_9$ |
| 391 | " | " | " | $-OCH_2CO_2C_2H_5$ |
| 392 | " | " | " | $-OC_6H_5$ |
| 393 | " | " | " | $-O-CH_2C_6H_5$ |
| 394 | " | " | " | $-OCH_2CH=CH_2$ |
| 395 | " | " | " | $-OCH_2C \equiv CH$ |
| 396 | " | " | " | $-O^-Na^+$ |
| 397 | " | " | " | $-OCH_2Si(CH_3)_3$ |
| 398 | " | " | " | $-N(CH_3)_2$ |
| 399 | " | " | " | $-O-CH(CH_3)CO_2C_2H_5$ |
| 400 | " | " | " | $-NH_2$ |
| 401 | " | " | " | $-O^-NH_4{}^+$ |
| 402 | " | " | " | $-OCH_3CO_2CH_3$ |
| 403 | " | " | " | $-OCH(CH_3)CO_2CH_3$ |
| 404 | " | " | " | $-O^-K^+$ |
| 405 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 406 | $(n)C_6H_{13}$ | $(n)C_6H_{13}$ | $(n)C_6H_{13}$ | OH |
| 407 | " | " | " | $-OCH_3$ |
| 408 | " | " | " | $-OC_2H_5$ |
| 409 | " | " | " | $-OC_3H_7$ |
| 410 | " | " | " | $-O-CH(CH_3)_2$ |
| 411 | " | " | " | $-OC_4H_9$ |
| 412 | " | " | " | $-OCH_2CO_2C_2H_5$ |
| 413 | " | " | " | $-OC_6H_5$ |
| 414 | " | " | " | $-O-CH_2C_6H_5$ |
| 415 | " | " | " | $-O-CH_2CH=CH_2$ |
| 416 | " | " | " | $-OCH_2C{\equiv}CH$ |
| 417 | " | " | " | $-O^-Na^+$ |
| 418 | " | " | " | $-OCH_2Si(CH_3)_3$ |
| 419 | " | " | " | $-N(CH_3)_2$ |
| 420 | " | " | " | $-O-CH(CH_3)CO_2C_2H_5$ |
| 421 | " | " | " | $-NH_2$ |
| 422 | " | " | " | $-O^-NH_4{}^+$ |
| 423 | " | " | " | $-OCH_2Cl_2CH_3$ |
| 424 | " | " | " | $-OCH(CH_3)CO_2CH_3$ |
| 425 | " | " | " | $-O^-K^+$ |
| 426 | " | " | " | $-OCH_2CH(CH_3)_2$ |

**Fortsetzung Tabelle 2**

| Bsp. | $R^1$ | $R^2$ | $R^3$ | Z |
|---|---|---|---|---|
| 427 | (iso)$C_4H_9$ | (iso)$C_4H_9$ | (iso)$C_4H_9$ | OH |
| 428 | " | " | " | $-OCH_3$ |
| 429 | " | " | " | $-OC_2H_5$ |
| 430 | " | " | " | $-OC_3H_7$ |
| 431 | " | " | " | $-O-CH(CH_3)_2$ |
| 432 | " | " | " | $-OC_4H_9$ |
| 433 | " | " | " | $-OCH_2CO_2C_2H_5$ |
| 434 | " | " | " | $-OC_6H_5$ |
| 435 | " | " | " | $-O-CH_2C_6H_5$ |
| 436 | " | " | " | $-O-CH_2CH=CH_2$ |
| 437 | " | " | " | $-OCH_2C\equiv CH$ |
| 438 | " | " | " | $-O^-Na^+$ |
| 439 | " | " | " | $-OCH_2Si(CH_3)_3$ |
| 440 | " | " | " | $-N(CH_3)_2$ |
| 441 | " | " | " | $-O-CH(CH_3)CO_2C_2H_5$ |
| 442 | " | " | " | $-NH_2$ |
| 443 | " | " | " | $-O^-NH_4^+$ |
| 444 | " | " | " | $-OCH_2Cl_2CH_3$ |
| 445 | " | " | " | $-OCH(CH_3)CO_2CH_3$ |
| 446 | " | " | " | $-O^-K^+$ |
| 447 | " | " | " | $-OCH_2CH(CH_3)_2$ |

**Fortetzung Tabelle 2**

| Bsp. | $R^1$ | $R^2$ | $R^3$ | Z |
|---|---|---|---|---|
| 448 | $(n)C_3H_7$ | $(n)C_3H_7$ | $(n)C_3H_7$ | OH |
| 449 | " | " | " | $-OCH_3$ |
| 450 | " | " | " | $-OC_2H_5$ |
| 451 | " | " | " | $-OC_3H_7$ |
| 452 | " | " | " | $-O-CH(CH_3)_2$ |
| 453 | " | " | " | $-OC_4H_9$ |
| 454 | " | " | " | $-OCH_2CO_2C_2H_5$ |
| 455 | " | " | " | $-OC_6H_5$ |
| 456 | " | " | " | $-O-CH_2C_6H_5$ |
| 457 | " | " | " | $-O-CH_2CH=CH_2$ |
| 458 | " | " | " | $-OCH_2C\equiv CH$ |
| 459 | " | " | " | $-O^-Na^+$ |
| 460 | " | " | " | $-OCH_2Si(CH_3)_3$ |
| 461 | " | " | " | $-N(CH_3)_2$ |
| 462 | " | " | " | $-O-CH(CH_3)CO_2C_2H_5$ |
| 463 | " | " | " | $-NH_2$ |
| 464 | " | " | " | $-O^-NH_4^+$ |
| 465 | " | " | " | $-OCH_2Cl_2CH_3$ |
| 466 | " | " | " | $-OCH(CH_3)CO_2CH_3$ |
| 467 | " | " | " | $-O^-K^+$ |
| 468 | " | " | " | $-OCH_2CH(CH_3)_2$ |

Fortsetzung Tabelle 2

| Bsp. | $R^1$ | $R^2$ | $R^3$ | Z |
|---|---|---|---|---|
| 469 | $CH_3$ | $CH_3$ | $(iso)C_3H_7$ | $OCH_3$ |
| 470 | " | " | " | $OC_2H_5$ |
| 471 | " | " | $-C(CH_3)_2CH(CH_3)_2$ | $OCH_3$ |
| 472 | " | " | " | $OC_2H_5$ |
| 473 | $-CH_2C_6H_5$ | $CH_2C_6H_5$ | $CH_2C_6H_5$ | $OCH_3$ |
| 474 | " | " | " | $OC_2H_5$ |
| 475 | $(n)C_4H_9$ | $(n)C_4H_9$ | $(n)C_4H_9$ | $OCH_3$ |
| 476 | " | " | " | $OC_2H_5$ |
| 477 | " | " | " | OH |
| 478 | $CH_3$ | $CH_3$ | $(n)C_8H_{17}$ | OH |
| 479 | " | " | " | $OCH_3$ |
| 480 | " | " | " | $OC_2H_5$ |
| 481 | " | " | $-CH_2C_6H_5$ | OH |
| 482 | " | " | " | $OCH_3$ |
| 483 | " | " | " | $OC_2H_5$ |
| 484 | " | " | $(n)C_{18}H_{37}$ | OH |
| 485 | " | " | " | $OCH_3$ |
| 486 | " | " | " | $OC_2H_5$ |
| 487 | " | " | $(n)C_{10}H_{21}$ | OH |
| 488 | " | " | " | $OCH_3$ |
| 489 | " | " | " | $OC_2H_5$ |

**Fortsetzung Tabelle 2**

| Bsp. | $R^1$ | $R^2$ | $R^3$ | Z |
|---|---|---|---|---|
| 490 | $CH_3$ | $CH_3$ | $-CH_2CH_2C(CH_3)_2CH_3$ | OH |
| 491 | " | " | " | $OCH_3$ |
| 492 | " | " | " | $OC_2H_5$ |
| 493 | " | " | $(iso)C_3H_7$ | OH |
| 494 | " | " | $C(CH_3)_2CH(CH_3)_2$ | OH |
| 495 | $CH_2C_6H_5$ | $CH_2C_6H_5$ | $CH_2C_6H_5$ | OH |
| 496 | $CH_3$ | $C_2H_5$ | $C_2H_5$ | OH |
| 497 | " | " | " | $OCH_3$ |
| 498 | " | " | " | $OC_2H_5$ |
| 499 | $CH_3$ | $CH_3$ | $(n)C_3H_7$ | OH |
| 500 | " | " | " | $OCH_3$ |
| 501 | " | " | " | $OC_2H_5$ |
| 502 | $CH_3$ | $(n)C_3H_7$ | $(n)C_3H_7$ | OH |
| 503 | " | " | " | $OCH_3$ |
| 504 | " | " | " | $OC_2H_5$ |
| 505 | $CH_3$ | $isoC_3H_7$ | $isoC_3H_7$ | OH |
| 506 | " | " | " | $OCH_3$ |
| 507 | " | " | " | $OC_2H_5$ |
| 508 | $CH_3$ | $CH_3$ | $n-C_4H_9$ | OH |
| 509 | " | " | " | $OCH_3$ |
| 510 | " | " | " | $OC_2H_5$ |
| 511 | " | $nC_4H_9$ | $n-C_4H_9$ | OH |
| 512 | " | " | " | $OCH_3$ |
| 513 | " | " | " | $OC_2H_5$ |
| 514 | $CH_3$ | $C_6H_5$ | $C_6H_5$ | OH |
| 515 | " | " | " | $OCH_3$ |
| 516 | " | " | " | $OC_2H_5$ |

Tabelle 3

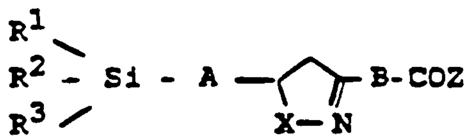
(3)

| Bsp. | $R^1$ | $R^2$ | $R^3$ | X | A | B | Z |
|---|---|---|---|---|---|---|---|
| 421 | $CH_3$ | $CH_3$ | $CH_3$ | O | - | $CH_2$ | $-OCH_3$ |
| 422 | " | " | " | " | " | " | $-OC_2H_5$ |
| 423 | " | " | " | " | $CH_2$ | " | $-OCH_3$ |
| 424 | " | " | " | " | " | " | $-OC_2H_5$ |
| 425 | " | " | " | " | - | $-CH_2CH_2-$ | $-OC_2H_5$ |
| 426 | " | " | " | " | $CH_2$ | " | $-OC_2H_5$ |
| 427 | " | " | " | " | " | " | $-OCH_3$ |
| 428 | " | " | " | S | $CH_2$ | - | $-OCH_3$ |
| 429 | " | " | " | " | " | " | $-OC_2H_5$ |
| 430 | " | " | " | " | - | - | $-OCH_3$ |
| 431 | " | " | " | " | " | " | $-OC_2H_5$ |
| 432 | " | " | " | " | - | $CH_2$ | $-OCH_3$ |
| 433 | " | " | " | " | - | $CH_2$ | $-OC_2H_5$ |
| 434 | " | " | " | O | $CH_2CH_2$ | - | $-OCH_3$ |
| 435 | " | " | " | " | " | - | $-OC_2H_5$ |
| 436 | " | " | " | " | " | $CH_2$ | $-OCH_3$ |
| 437 | " | " | " | " | " | $CH_2$ | $-OC_2H_5$ |

**Tabelle 4**

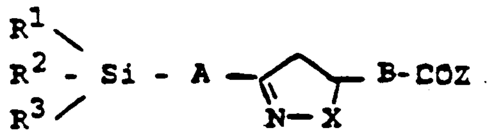

(4)

| Bsp. | $R^1$ | $R^2$ | $R^3$ | A | B | X | Z |
|---|---|---|---|---|---|---|---|
| 438 | $CH_3$ | $CH_3$ | $CH_3$ | - | - | O | $-OCH_3$ |
| 439 | " | " | " | " | " | " | $-OC_2H_5$ |
| 440 | " | " | " | $CH_2$ | - | O | $-OCH_3$ |
| 441 | " | " | " | " | " | " | $-OC_2H_5$ |
| 442 | " | " | " | " | $CH_2$ | " | $-OCH_3$ |
| 443 | " | " | " | " | " | " | $-OC_2H_5$ |
| 444 | " | " | " | - | $CH_2$ | " | $-OCH_3$ |
| 445 | " | " | " | - | $CH_2$ | " | $-OC_2H_5$ |
| 446 | " | " | " | - | - | S | $-OCH_3$ |
| 447 | " | " | " | " | " | " | $-OC_2H_5$ |
| 448 | " | " | " | $CH_2$ | - | " | $-OCH_3$ |
| 449 | " | " | " | " | " | " | $-OC_2H_5$ |
| 450 | " | " | " | $CH_2$ | $CH_2$ | " | $-OCH_3$ |
| 451 | " | " | " | " | " | " | $-OC_2H_5$ |
| 452 | " | " | " | - | $CH_2$ | " | $-OCH_3$ |
| 453 | " | " | " | " | " | " | $-OC_2H_5$ |

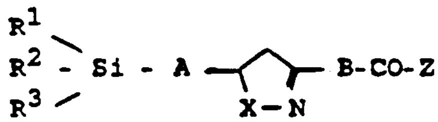

(5)

| Bsp. | $R^1$ | $R^2$ | $R^3$ | A | B | X | Z | mp/$n_D^{20}$ |
|---|---|---|---|---|---|---|---|---|
| 454 | $CH_3$ | $CH_3$ | $CH_3$ | - | - | O | $-OCH_3$ | |
| 455 | " | " | " | " | " | " | $-OC_2H_5$ | |
| 456 | " | " | " | $CH_2$ | - | O | $-OCH_3$ | |
| 457 | " | " | " | " | " | " | $-OC_2H_5$ | |
| 458 | " | " | " | " | $CH_2$ | " | $-OCH_3$ | |
| 459 | " | " | " | " | " | " | $-OC_2H_5$ | |
| 460 | " | " | " | - | $CH_2$ | " | $-OCH_3$ | |
| 461 | " | " | " | - | $CH_2$ | " | $-OC_2H_5$ | |
| 462 | " | " | " | - | - | S | $-OCH_3$ | |
| 463 | " | " | " | " | " | " | $-OC_2H_5$ | |
| 464 | " | " | " | $CH_2$ | - | " | $-OCH_3$ | |
| 465 | " | " | " | " | " | " | $-OC_2H_5$ | |
| 466 | " | " | " | $CH_2$ | $CH_2$ | " | $-OCH_3$ | |
| 467 | " | " | " | " | " | " | $-OC_2H_5$ | |
| 468 | " | " | " | - | $CH_2$ | " | $-OCH_3$ | |
| 469 | " | " | " | " | " | " | $-OC_2H_5$ | |
| 479 | " | " | " | $CH_2$ | $CH_2$ | O | $-CH_2C{\equiv}CH$ | |
| 471 | " | " | " | - | - | " | $-CH_2C{\equiv}CH$ | |
| 472 | " | " | " | $CH_2$ | - | " | $-CH_2C{\equiv}CH$ | |
| 473 | " | " | " | - | $CH_2$ | " | $-CH_2C{\equiv}CH$ | |
| 474 | " | " | " | - | - | S | $-CH_2C{\equiv}CH$ | |
| 475 | " | " | " | - | - | S | $-CH_2CH{=}CH_2$ | |
| 476 | " | " | " | - | - | O | $-CH_2CH{=}CH_2$ | |
| 477 | " | " | " | - | - | O | $-(CH_2)_3CH_3$ | |
| 478 | " | " | " | - | - | S | $-(CH_2)_3CH_3$ | |
| 479 | " | " | " | - | - | S | OH | |
| 480 | " | " | " | - | - | O | OH | |
| 481 | $CH_3$ | $CH_3$ | $CH_3$ | $CH_2$ | $CH_2$ | O | OH | |
| 482 | " | " | " | $CH_2$ | - | O | OH | |
| 483 | " | " | " | - | $CH_2$ | O | OH | |
| 484 | " | " | " | - | $CH_2$ | S | OH | |
| 485 | " | " | " | $CH_2$ | - | S | OH | |

**Tabelle 6**

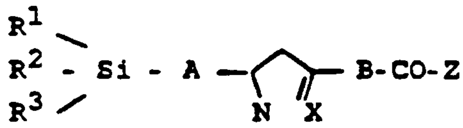 (6)

| Bsp. | $R^1$ | $R^2$ | $R^3$ | A | B | X | Z | mp/$n_D^{20}$ |
|---|---|---|---|---|---|---|---|---|
| 486 | " | " | " | - | - | O | OH | |
| 487 | " | " | " | - | - | S | OH | |
| 488 | " | " | " | $CH_2$ | $CH_2$ | O | OH | |
| 489 | " | " | " | $CH_2$ | - | O | OH | |
| 490 | $CH_3$ | $CH_3$ | $CH_3$ | - | - | O | $-OCH_3$ | |
| 491 | " | " | " | " | " | " | $-OC_2H_5$ | |
| 492 | " | " | " | $CH_2$ | - | O | $-OCH_3$ | |
| 493 | " | " | " | " | " | " | $-OC_2H_5$ | |
| 494 | " | " | " | " | $CH_2$ | " | $-OCH_3$ | |
| 495 | " | " | " | " | " | " | $-OC_2H_5$ | |
| 496 | " | " | " | - | $CH_2$ | " | $-OCH_3$ | |
| 497 | " | " | " | - | $CH_2$ | " | $-OC_2H_5$ | |
| 498 | " | " | " | - | - | S | $-OCH_3$ | |
| 499 | " | " | " | " | " | " | $-OC_2H_5$ | |
| 500 | " | " | " | $CH_2$ | - | " | $-OCH_3$ | |
| 501 | " | " | " | " | " | " | $-OC_2H_5$ | |
| 502 | " | " | " | $CH_2$ | $CH_2$ | " | $-OCH_3$ | |
| 503 | " | " | " | " | " | " | $-OC_2H_5$ | |
| 504 | " | " | " | - | $CH_2$ | " | $-OCH_3$ | |
| 505 | " | " | " | " | " | " | $-OC_2H_5$ | |
| 506 | " | " | " | $CH_2$ | $CH_2$ | O | $-CH_2C\equiv CH$ | |
| 507 | " | " | " | - | - | " | $-CH_2C\equiv CH$ | |
| 508 | " | " | " | $CH_2$ | - | " | $-CH_2C\equiv CH$ | |
| 509 | " | " | " | - | $CH_2$ | " | $-CH_2C\equiv CH$ | |
| 510 | " | " | " | - | - | S | $-CH_2C\equiv CH$ | |
| 511 | " | " | " | - | - | S | $-CH_2CH=CH_2$ | |
| 512 | " | " | " | - | - | O | $-CH_2CH=CH_2$ | |
| 513 | " | " | " | - | - | O | $-(CH_2)_3CH_3$ | |
| 514 | " | " | " | - | - | S | $-(CH_2)_3CH_3$ | |

## C. Biologische Beispiele

Weizen und Gerste wurden im Gewächshaus in Plastiktöpfen bis zum 3-4-Blattstadium herangezogen und dann mit erfindungsgemäßen Verbindungen und Herbiziden im Nachauflaufverfahren behandelt. Die

Herbizide und die Verbindungen der Formel (I) wurden dabei in Form wäßriger Suspensionen bzw. Emulsionen mit einer Wasseraufwandmenge von umgerechnet 800 l/ha ausgebracht. 3-4 Wochen nach der Behandlung wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen.

Die Ergebnisse aus Tabelle 7 veranschaulichen, daß die erfindungsgemäßen Verbindungen starke Herbizidschäden an Kulturpflanzen effektiv reduzieren können.

Selbst bei starken Überdosierungen der Herbizide werden bei den Kulturpflanzen auftretende schwere Schädigungen deutlich reduziert und geringere Schäden völlig aufgehoben. Mischungen aus Herbiziden und erfindungsgemäßen Verbindungen eignen sich deshalb in ausgezeichneter Weise zur selektiven Unkrautbekämpfung in Getreidekulturen.

Tabelle 7

| Safenerwirkung der erfindungsgemäßen Verbindungen | | | |
|---|---|---|---|
| Herbizid (H) + Safener Nr. | Dosis kg a.i./ha | Kulturpflanzenschädigung (%) | |
| | | TRAE | HOVU |
| H | 2,0 | 80 | - |
| | 0,2 | - | 85 - 90 |
| H + 2 | 2,0 + 1,25 | 20 | - |
| H + 3 | 0,2 + 1,25 | - | 30 |
| H + 4 | 2,0 + 1,25 | 25 | - |
| H + 261 | 0,2 + 1,25 | - | 35 |

Abkürzungen:
TRAE = Triticum aestivum (Weizen)
HOVU = Hordeum vulgare (Gerste)
a.i. = Aktivsubstanz (d.h. bezogen auf reinen Wirkstoff)
H = 2-(4-(6-Chlorbenzoxazol-2-yloxy)-phenoxy-propionsäureethylester (Fenoxaprop-ethyl)
Safener Nr. = Nr. des Herstellungsbeispiels aus Tabellen 1-6

## Patentansprüche

**1.** Verbindungen der Formel I und deren Salze

$(R^1)(R^2)(R^3)$ Si - A - Het - B - CO - Z (I)

worin

Het ein divalenter heterocyclischer Rest aus der Gruppe Isothiazoline, Isothiazole bzw. Isoxazole, Isoxazoline der Formeln (Ia) bis (Id),

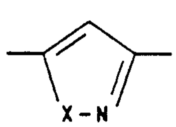
(Ia)

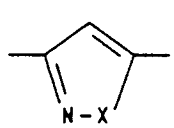
(Ib)

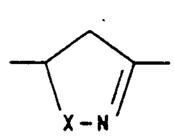
(Ic)

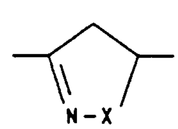
(Id)

in denen

X ein Sauerstoff- oder Schwefelatom bedeutet,

A und B unabhängig voneinander jeweils eine einfache Bindung oder $C_1$-$C_4$-Alkylen, das un-

substituiert oder ein- oder mehrfach durch $C_1$-$C_4$-Alkyl substituiert ist,

$R^1$, $R^2$, $R^3$ unabhängig voneinander $C_1$-$C_{18}$-Alkyl, $C_2$-$C_{18}$-Alkenyl, $C_2$-$C_{18}$-Alkinyl oder $C_3$-$C_8$-Cycloalkyl, wobei die 4 letztgenannten Reste unsubstituiert oder ein- oder mehrfach durch Reste aus der Gruppe $C_1$-$C_4$-Alkoxy, $C_1$-$C_4$-Alkylthio, Mono- oder Di-($C_1$-$C_4$-alkyl)-amino, ($C_1$-$C_4$)-Alkoxy)-carbonyl, ($C_1$-$C_4$-Alkyl)-carbonyloxy, Cyano und Halogen substituiert sind, ferner Phenyl-($C_1$ -$C_4$-alkyl) oder Phenyl, wobei die letztgenannten 2 Reste unsubstituiert oder ein- oder mehrfach durch Reste aus der Gruppe $C_1$-$C_4$-Alkyl, $C_1$-$C_4$-Alkoxy, $C_1$-$C_4$-Alkylthio, Mono- und Di-($C_1$-$C_4$-alkyl)-amino, Cyano und Halogen substituiert sind,

Z Hydroxy, $C_1$-$C_6$-Alkoxy, $C_2$-$C_6$-Alkenyloxy, $C_2$-$C_6$-Alkinyloxy, $C_1$-$C_6$-Alkylthio, $C_3$-$C_6$-Cycloalkoxy, Phenoxy oder Benzyloxy, wobei die 7 letztgenannten Reste unsubstituiert oder ein- oder mehrfach durch Reste aus der Gruppe $C_1$-$C_4$-Alkoxy, Mono- oder Di-($C_1$-$C_4$-alkyl)-amino, $C_1$-$C_4$-Alkylthio, $C_1$-$C_4$-Halogenalkyl, $C_1$-$C_4$-Halogenalkoxy, Cyano und Halogen

Z ferner Tri($C_1$-$C_4$)-alkyl)-silylmethoxy, ferner einen Rest der Formel (Ie) oder (If),

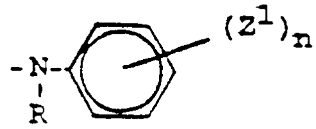

(Ie)

oder

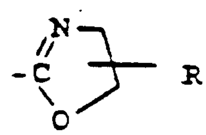

(If)

worin jeweils R Wasserstoff oder ($C_1$-$C_4$)Alkyl bedeutet, $Z^1$ Halogen ist und n 0, 1, 2, 3, 4 oder 5 ist, oder

Z ferner Amino, Mono- oder Di-($C_1$-$C_4$-alkyl)-amino, $C_5$-$C_6$-Cycloalkylamino, Hydrazino, Piperidino, Morpholino oder 2,6-Dimethylmorpholino, einen Rest der Formel (Ig),

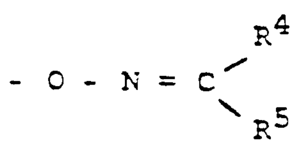

(Ig)

worin $R^4$ und $R^5$ unabhängig voneinander $C_1$-$C_4$-Alkyl bedeuten oder gemeinsam mit dem sie verknüpftenden C-Atom einen 5-, 6- oder 7-gliedrigen Cycloalkylrest bilden, oder

Z einen Rest der genannten Formel (Ih),

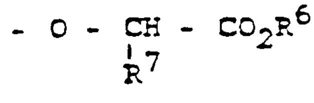

(Ih)

worin $R^6$ und $R^7$ unabhängig voneinander für Wasserstoff oder $C_1$-$C_6$-alkyl, $C_2$-$C_6$-Alkyl oder $C_2$-$C_6$-Alkinyl stehen,

bedeuten.

**2.** Verbindungen und deren Salze nach Anspruch 1, dadurch gekennzeichnet, daß

Z Hydroxy, $C_1$-$C_4$-Alkoxy, $C_2$-$C_4$-Alkenyloxy, $C_2$-$C_4$-Alkinyloxy, $C_1$-$C_4$-Alkylthio, Phenoxy oder Benzyloxy, wobei die letztgenannten 6 Reste unsubstituiert oder ein- oder mehrfach durch Reste aus der Gruppe $C_1$-$C_4$-Alkyl, $C_1$-$C_4$-Alkoxy, $C_1$-$C_4$-Alkylthio, Mono- oder Di-($C_1$-$C_4$-

alkyl)-amino, Cyano und Halogen substituiert sind, ferner Tri-($C_1$-$C_2$-alkyl)-silylmethoxy einen Rest der genannten Formel (Ie) oder (If), worin R Wasserstoff oder $C_1$-$C_4$-Alkyl, $Z^1$ Halogen und n 0-5 sind, ferner Mono- und Di-($C_1$-$C_4$-alkyl)-amino, $C_5$-$C_6$-Cycloalkylamino, einen Rest der genannten Formel (Ih), worin $R^6$ für $C_1$-$C_4$-Alkyl, $C_2$-$C_4$-Alkenyl oder $C_2$-$C_6$-Alkinyl und $R^7$ für Wasserstoff oder Methyl stehen,
bedeutet.

**3.** Verbindungen und deren Salze nach Anspruch 1 oder 2, dadurch gekennzeichnet, daß
A eine direkte Bindung oder $C_1$-$C_2$-Alkylen, vorzugsweise eine direkte Bindung oder $CH_2$, und
B eine direkte Bindung oder $C_1$-$C_2$-Alkylen, vorzugsweise eine direkte Bindung oder $CH_2$,
bedeuten.

**4.** Verfahren zur Herstellung einer nach einem oder mehreren der Ansprüche 1 bis 3 definierten Verbindung der Formel (I) oder deren Salze, dadurch gekennzeichnet, daß man eine Verbindung der Formel (II) oder (III),

$$(R^1)\,(R^2)\,(R^3)\,Si - A - CH = CH_2 \qquad (II)$$

$$(R^1)\,(R^2)\,(R^3)\,Si - A - C \equiv CH \qquad (III)$$

worin $R^1$, $R^2$, $R^3$ und A die bei Formel (I) angegebenen Bedeutungen haben, mit einem Nitriloxid der Formel (IV),

$$^{(-)}O - N = \overset{(+)}{C} - B - CO - Z \qquad (IV)$$

worin Z und B die bei Formel (I) angegebenen Bedeutungen haben, umsetzt oder daß man eine Verbindung der Formel (V)
oder (VI)

$$H_2C = CH - B - CO - Z \qquad (V)$$

$$HC \equiv C - B - CO - Z \qquad (VI)$$

worin B und Z die bei Formel (I) angegebenen Bedeutungen haben, mit einer Verbindung der Formel (VII),

$$(R^1)\,(R^2)\,(R^3)\,Si - A - C^{(+)} = N - O^{(-)} \qquad (VII)$$

worin $R^1$, $R^2$, $R^3$ und A die oben bei Formel (I) genannten Bedeutungen haben, umsetzt.

**5.** Pflanzenschützende oder pflanzenwachstumsregulierende Mittel, dadurch gekennzeichnet, daß sie Verbindungen der Formel (I) oder deren Salze nach einem oder mehreren der Ansprüche 1 bis 3 und inerte Zusatzstoffe oder Formulierungshilfsmittel enthalten.

**6.** Selektive herbizide Mittel, dadurch gekennzeichnet, daß sie ein oder mehrere Herbizide in Kombination mit nach einem oder mehreren der Ansprüche 1 bis 3 definierten Verbindungen der Formel (I) oder deren Salze, enthalten.

**7.** Mittel nach Anspruch 6, dadurch gekennzeichnet, daß sie als Herbizide ein oder mehrere Wirkstoffe aus der Gruppe, enthaltend Carbamate, Thiocarbamate, Halogenacetanilide, substituierte Phenoxy-, Naphthoxy-, Phenoxyphenoxy-, Benzyloxyphenoxy- und Heteroaryloxyphenoxy-carbonsäurederivate und Cyclohexandion-derivate, enthalten.

**8.** Verfahren zur selektiven Bekämpfung von unerwünschten Pflanzen in Nutzpflanzenkulturen, dadurch gekennzeichnet, daß man ein Herbizid in Kombination mit nach einem oder mehreren der Ansprüche 1 bis 3 definierten Verbindungen der Formel (I) oder deren Salze auf die Pflanzen, Pflanzensamen oder die Anbaufläche appliziert.

**9.** Verfahren zum Schutz von Nutzpflanzen gegen phytotoxische Nebenwirkungen von Herbiziden, dadurch gekennzeichnet, daß man Herbizide in Kombination mit nach einem oder mehreren der Ansprüche 1 bis 3 definierten Verbindungen der Formel (I) oder deren Salze auf die Pflanzen, Pflanzensamen oder die Anbaufläche appliziert.

**10.** Verwendung von nach einem oder mehreren der Ansprüche 1 bis 3 definierten Verbindungen der Formel (I) oder deren Salze zum Schutz von Nutzpflanzen gegen phytotoxische Nebenwirkungen von Herbiziden.

## Claims

**1.** A compound of the formula I and salts thereof

$(R^1)(R^2)(R^3)Si\text{-}A\text{-}Het\text{-}B\text{-}CO\text{-}Z$ (I)

in which

Het is a divalent heterocyclic radical from the group consisting of isothiazolines, isothiazoles or isoxazoles, and isoxazolines of the formulae (Ia) to (Id),

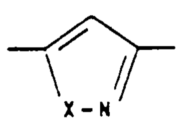
(Ia)

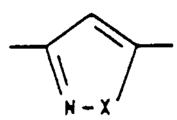
(Ib)

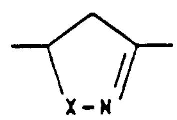
(Ic)

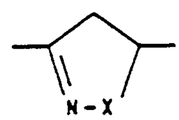
(Id)

in which

X is an oxygen or sulfur atom,

A and B independently of one another in each case are a single bond or $C_1$-$C_4$-alkylene which is unsubstituted or mono- or polysubstituted by $C_1$-$C_4$-alkyl,

$R^1$, $R^2$ and $R^3$ independently of one another are $C_1$-$C_{18}$-alkyl, $C_2$-$C_{18}$-alkenyl, $C_2$-$C_{18}$-alkynyl or $C_3$-$C_8$-cycloalkyl, the 4 last-mentioned radicals being unsubstituted or mono- or polysubstituted by radicals from the group consisting of $C_1$-$C_4$-alkoxy, $C_1$-$C_4$-alkylthio, mono- or di-($C_1$-$C_4$-alkyl)amino,($C_1$-$C_4$-alkoxy)carbonyl, ($C_1$-$C_4$-alkyl)-carbonyloxy, cyano and halogen, furthermore phenyl-($C_1$-$C_4$-alkyl) or phenyl, the last-mentioned 2 radicals being unsubstituted or mono- or polysubstituted by radicals from the group consisting of $C_1$-$C_4$-alkyl, $C_1$-$C_4$-alkoxy, $C_1$-$C_4$-alkylthio, mono- and di-($C_1$-$C_4$-alkyl)amino, cyano and halogen,

Z is hydroxyl, $C_1$-$C_6$-alkoxy, $C_2$-$C_6$-alkenyloxy, $C_2$-$C_6$-alkynyloxy, $C_1$-$C_6$-alkylthio, $C_3$-$C_6$-cycloalkoxy, phenoxy or benzyloxy, the 7 last-mentioned radicals being unsubstituted or mono- or polysubstituted by radicals from the group consisting of $C_1$-$C_4$-alkoxy, mono- or di-($C_1$-$C_4$-alkyl)amino, $C_1$-$C_4$-alkylthio, $C_1$-$C_4$-haloalkyl, $C_1$-$C_4$-haloalkoxy, cyano and halogen,

Z is furthermore tri($C_1$-$C_4$-alkyl)silylmethoxy, furthermore a radical of the formula (Ie) or (If)

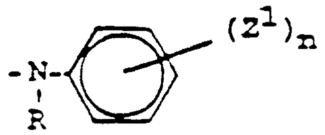 or 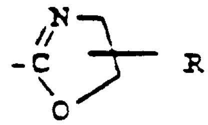

(Ie) (If)

in which R in each case is hydrogen or ($C_1$-$C_4$)-alkyl, $Z^1$ is halogen and n is 0, 1, 2, 3, 4 or 5, or

Z is furthermore amino, mono- or di-($C_1$-$C_4$-alkyl)-amino, $C_5$-$C_6$-cycloalkylamino, hydrazino, piperidino, morpholino or 2,6-dimethylmorpholino, a radical of the formula (Ig)

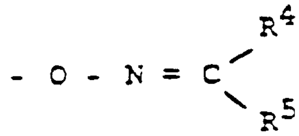

(Ig)

in which $R^4$ and $R^5$ independently of one another are $C_1$-$C_4$-alkyl or together with the carbon atom linking them form a 5-, 6- or 7-membered cycloalkyl radical, or

Z is a radical of the formula (Ih)

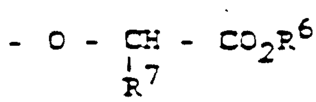

(Ih)

in which $R^6$ and $R^7$ independently of one another are hydrogen or $C_1$-$C_6$-alkyl, $C_2$-$C_6$-alkyl or $C_2$-$C_6$-alkynyl.

**2.** A compound and salts thereof as claimed in claim 1 wherein

Z is hydroxyl, $C_1$-$C_4$-alkoxy, $C_2$-$C_4$-alkenyloxy, $C_2$-$C_4$-alkynyloxy, $C_1$-$C_4$-alkylthio, phenoxy or benzyloxy, the last-mentioned 6 radicals being unsubstituted or mono- or polysubstituted by radicals from the group consisting of $C_1$-$C_4$-alkyl, $C_1$-$C_4$-alkoxy, $C_1$-$C_4$-alkylthio, mono- or di-($C_1$-$C_4$-alkyl)amino, cyano and halogen, furthermore tri-($C_1$-$C_2$-alkyl)silylmethoxy, a radical of the formula (Ie) or (If) mentioned where R is hydrogen or $C_1$-$C_4$-alkyl, $Z^1$ is halogen and n is 0-5, furthermore mono- and di-($C_1$-$C_4$-alkyl)amino, $C_5$-$C_6$-cycloalkylamino, a radical of the formula (Ih) mentioned where $R^6$ is $C_1$-$C_4$-alkyl, $C_2$-$C_4$-alkenyl or $C_2$-$C_6$-alkynyl and $R^7$ is hydrogen or methyl.

**3.** A compound and salts as claimed in claim 1 or 2 wherein

A is a direct bond or $C_1$-$C_2$-alkylene, preferably a direct bond or $CH_2$, and

B is a direct bond or $C_1$-$C_2$-alkylene, preferably a direct bond or $CH_2$.

**4.** A process for the preparation of a compound of the formula (I) or salts thereof, as defined in one or more of claims 1 to 3, which comprises reacting a compound of the formula (II) or (III)

$(R^1)(R^2)(R^3)Si\text{-}A\text{-}CH=CH_2$ (II)

$(R^1)(R^2)(R^3)Si\text{-}A\text{-}C\equiv CH$ (III)

in which $R^1$, $R^2$, $R^3$ and A have the meanings given in the case of formula (I), with a nitrile oxide of the formula (IV)

$$^{(-)}O-N=\overset{(+)}{C}-B-CO-Z \qquad (IV)$$

in which Z and B have the meanings given in the case of formula (I), or reacting a compound of the formula (V) or (VI)

$H_2C=CH-B-CO-Z$ (V)

$HC \equiv C-B-CO-Z$ (VI)

in which B and Z have the meanings given in the case of formula (I), with a compound of the formula (VII)

$(R^1)(R^2)(R^3)Si-A-C^{(+)}=N-O^{(-)}$ (VII)

in which $R^1$, $R^2$, $R^3$ and A have the meanings mentioned above in the case of formula (I).

**5.** A plant protecting or plant-growth-regulating agent which comprises a compound of the formula (I) or salts thereof, as claimed in one or more of claims 1 to 3, and inert additives or formulation auxiliaries.

**6.** A selective herbicidal agent which comprises one or more herbicides in combination with a compound of the formula (I) or salts thereof, as defined in one or more of claims 1 to 3.

**7.** An agent as claimed in claim 6 which comprises, as herbicides, one or more active substances from the group consisting of carbamates, thiocarbamates, haloacetanilides, substituted phenoxy-, naphthoxy-, phenoxyphenoxy-, benzyloxyphenoxy- and heteroaryloxyphenoxy-carboxylic acid derivatives and cyclohexanedione derivatives.

**8.** A method of selectively controlling undesired plants in crops of useful plants, which comprises applying, to the plants, seeds of plants or the area under cultivation, a herbicide in combination with a compound of the formula (I) or salts thereof, as defined in one or more of claims 1 to 3.

**9.** A method of protecting useful plants against phytotoxic side effects of herbicides, which comprises applying, to the plants, seeds of plants or the area under cultivation, herbicides in combination with a compound of the formula (I) or salts thereof, as defined in one or more of claims 1 to 3.

**10.** Use of a compound of the formula (I) or salts thereof, as defined in one or more of claims 1 to 3, for protecting crop plants against phytotoxic side effects of herbicides.

## Revendications

**1.** Composés de formule (I) et leurs sels,

$(R^1)(R^2)(R^3)Si-A-Het-B-CO-Z$ (I)

dans laquelle

Het signifie un reste hétérocyclique divalent appartenant au groupe des isothiazolines, des isothiazoles ou bien isoxazoles, des isoxazolines de formules (Ia) à (Id),

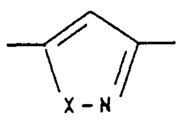
(Ia)

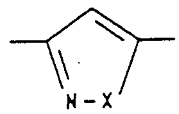
(Ib)

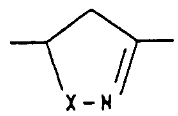
(Ic)

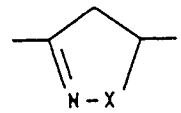
(Id)

dans lesquelles X signifie un atome d'oxygène ou de soufre,

A et B signifient, indépendamment l'un de l'autre, à chaque fois une liaison simple ou un alkylène en $C_1$-$C_4$, qui est non substitué ou bien substitué une ou plusieurs fois par des alkyles en $C_1$-$C_4$,

$R^1$, $R^2$, $R^3$ signifient, indépendamment l'un de l'autre, des alkyles en $C_1$-$C_{18}$, des alcényles en $C_2$-$C_{18}$, des alcynyles en $C_2$-$C_{18}$ ou des cycloalkyles en $C_3$-$C_8$, les quatre restes qui viennent d'être mentionnés étant non substitués ou bien substitués une ou plusieurs fois par des restes appartenant au groupe des alcoxy en $C_1$-$C_4$, des alkylthio en $C_1$-$C_4$, des mono- ou di-(alkyl en $C_1$-$C_4$)-amino, des (alcoxy en $C_1$-$C_4$)-carbonyles, des (alkyl en $C_1$-$C_4$)-carbonyloxy, du cyano et des halogènes, de plus des phényl-(alkyle en $C_1$-$C_4$) ou le phényle, les deux restes qui viennent d'être mentionnés étant non substitués ou substitués une ou plusieurs fois par des restes appartenant au groupe des alkyles en $C_1$-$C_4$, des alcoxy en $C_1$-$C_4$, des alkylthio en $C_1$-$C_4$, des mono- et di-(alkyl en $C_1$-$C_4$)-amino, du cyano et des halogènes,

Z signifie un hydroxy, en alcoxy en $C_1$-$C_6$, un alcényloxy en $C_2$-$C_6$, un alcynyloxy en $C_2$-$C_6$, un alkylthio en $C_1$-$C_6$, un cycloalcoxy en $C_3$-$C_6$, un phénoxy ou un benzyloxy, les sept restes qui viennent d'être mentionnés étant non substitués ou bien substitués une ou plusieurs fois par des restes appartenant au groupe des alcoxy en $C_1$-$C_4$, des mono- ou di-(alkyl en $C_1$-$C_4$)-amino, des alkylthio en $C_1$-$C_4$, des halogéno-alkyles en $C_1$-$C_4$, des halogéno-alcoxy en $C_1$-$C_4$, du cyano et des halogènes,

Z signifie, de plus, un tri-(alkyl en $C_1$-$C_4$)-silylméthoxy, de plus un reste de formules (Ie) ou (If),

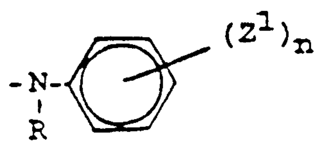
(Ie)

ou

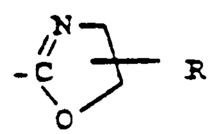
(If)

dans lesquelles R signifie à chaque fois un hydrogène ou un alkyle en $C_1$-$C_4$, $Z^1$ est un halogène et n vaut 0, 1, 2, 3, 4 ou 5, ou bien

Z signifie de plus un amino, un mono- ou di-(alkyl en $C_1$-$C_4$)-amino, un (cycloalkyl en $C_5$-$C_6$)-amino, un hydrazino, un pipéridino, un morpholino ou un 2,6-diméthylmorpholino, un reste de formule (Ig),

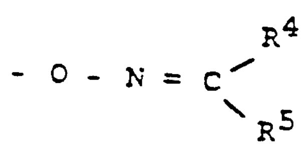
(Ig)

dans laquelle $R^4$ et $R^5$ signifient, indépendamment l'un de l'autre, un alkyle en $C_1$-$C_4$, ou bien $R^4$ et $R^5$ forment ensemble, avec l'atome de carbone auquel ils sont reliés, un

reste cycloalkyle à 5, 6 ou 7 chaînons, ou bien

Z signifie un reste de formule (Ih) mentionnée,

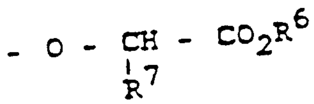

(Ih)

dans laquelle $R^6$ et $R^7$ représentent, indépendamment l'un de l'autre, un hydrogène ou un alkyle en $C_1$-$C_6$, un alkyle en $C_2$-$C_6$ ou un alcinyle en $C_2$-$C_6$.

**2.** Composés et leurs sels selon la revendication 1, caractérisés en ce que

Z signifie un hydroxy, en alcoxy en $C_1$-$C_4$, un alcényloxy en $C_2$-$C_4$, un alcynyloxy en $C_2$-$C_4$, un alkylthio en $C_1$-$C_4$, un phénoxy ou un benzyloxy, les six restes venant d'être mentionnés étant non substitués ou bien substitués une ou plusieurs fois par des restes appartenant au groupe des alkyles en $C_1$-$C_4$, des alcoxy en $C_1$-$C_4$, des alkylthio en $C_1$-$C_4$, des mono- ou di-(alkyl en $C_1$-$C_4$)-amino, des cyano et des halogènes, de plus un tri-(alkyl en $C_1$-$C_2$)-silylméthoxy, un reste de formules (Ie) ou (If) mentionnées, dans lesquelles R est un hydrogène ou un alkyle en $C_1$-$C_4$, $Z^1$ est halogène et n vaut de 0 à 5, de plus un mono- ou di-(alkyl en $C_1$-$C_4$)-amino, un (cycloalkyl en $C_5$-$C_6$)-amino, un reste de formule (Ih) mentionnée, dans laquelle $R^6$ représente un alkyle en $C_1$-$C_4$, un alcényle en $C_2$-$C_4$ ou un alcynyle en $C_2$-$C_6$ et $R^7$ représente un hydrogène ou un méthyle.

**3.** Composés et leurs sels selon la revendication 1 ou 2, caractérisés en ce que

A signifie une liaison directe ou un alkylène en $C_1$-$C_2$, de préférence une liaison directe ou un $CH_2$, et

B signifie une liaison directe ou un alkylène en $C_1$-$C_2$, de préférence une liaison directe ou un $CH_2$.

**4.** Procédé de préparation d'un composé de formule (I) ou de leurs sels définis selon une ou plusieurs des revendications 1 à 3, caractérisé en ce que l'on fait réagir un composé de formules (II) ou (III),

$(R^1)(R^2)(R^3)Si\text{-}A\text{-}CH=CH_2$ (II)

$(R^1)(R^2)(R^3)Si\text{-}A\text{-}C\equiv CH$ (III)

dans lesquelles $R^1$, $R^2$, $R^3$ et A ont les significations données pour la formule (I), avec un nitrile-oxyde de formule (IV),

$^{(-)}O - N = C^{(+)} - B - CO\text{-}Z$ (IV)

dans laquelle Z et B ont les significations données dans la formule (I) ou bien en ce que l'on fait réagir un composé de formules (V) ou (VI),

$H_2C = CH - B - CO - Z$ (V)

$HC \equiv C - B - CO - Z$ (VI)

dans lesquelles B et Z ont les significations données pour la formule (I), avec un composé de formule (VII)

$(R^1)(R^2)(R^3)Si\text{-}A\text{-}C^{(+)}=N\text{-}O^{(-)}$ (VII)

dans laquelle $R^1$, $R^2$, $R^3$ et A ont les significations données pour la formule (I).

5. Agents phytoprotecteurs et agents de régulation de croissance des plantes, caractérisés en ce qu'ils contiennent des composés de formule (I) ou leurs sels selon une ou plusieurs des revendications 1 à 3 et des additifs inertes ou des agents auxiliaires de formulation.

6. Agents herbicides sélectifs, caractérisés en ce qu'ils contiennent un ou plusieurs herbicides en combinaison avec des composés de formule (I) ou leurs sels définis selon l'une ou plusieurs des revendications 1 à 3.

7. Agents selon la revendication 6, caractérisés en ce qu'ils contiennent, en tant qu'herbicides, une ou plusieurs substances actives appartenant aux groupes contenant des carbamates, des thiocarbamates, des halogénoacétanilides, des dérivés des acides phénoxy-, naphtoxy-, phénoxyphénoxy-, benzyloxy-phénoxy- et hétéroaryloxyphénoxy-carboxyliques et des dérivés de la cyclohexanedione

8. Procédé de lutte sélective contre les plantes non désirées dans des cultures de plantes utiles, caractérisé en ce qu'on applique un herbicide en combinaison avec des composés de formule (I) ou leurs sels définis selon l'une ou plusieurs des revendications 1 à 3 sur des plantes, des semences de plantes ou des terres arables.

9. Procédé de protection de plantes utiles contre les effets secondaires phytotoxiques des herbicides, caractérisé en ce qu'on applique des herbicides en combinaison avec des composés de formule (I) ou leurs sels définis selon l'une ou plusieurs des revendications 1 à 3 sur des plantes, des semences de plantes ou des terres arables.

10. Utilisation des composés de formule (I) ou de leurs sels définis selon l'une ou plusieurs des revendications 1 à 3 pour la protection de plantes utiles face aux effets secondaires phytotoxiques des herbicides.